(19) Europäisches Patentamt
European Patent Office
Office européen des brevets

(11) **EP 3 880 380 B1**

(12) **EUROPÄISCHE PATENTSCHRIFT**

(45) Veröffentlichungstag und Bekanntmachung des Hinweises auf die Patenterteilung:
**30.08.2023   Patentblatt 2023/35**

(21) Anmeldenummer: **18825561.6**

(22) Anmeldetag: **15.11.2018**

(51) Internationale Patentklassifikation (IPC):
*B21C 37/04* $^{(2006.01)}$        *B21D 5/08* $^{(2006.01)}$
*B23K 35/40* $^{(2006.01)}$       *B23K 35/02* $^{(2006.01)}$

(52) Gemeinsame Patentklassifikation (CPC):
**B21C 37/042; B21C 37/045; B21D 5/08; B23K 35/0261; B23K 35/40**

(86) Internationale Anmeldenummer:
**PCT/EP2018/000513**

(87) Internationale Veröffentlichungsnummer:
**WO 2019/057335 (28.03.2019 Gazette 2019/13)**

(54) **VERFAHREN ZUR HERSTELLUNG EINES ROHDRAHTES AUS EINEM ERSTEN METALLBAND UND WENIGSTENS EINEM WEITEREN METALLBAND DURCH WALZPROFILIEREN**

METHOD FOR PRODUCING A RAW WIRE FROM A FIRST METAL STRIP AND AT LEAST ONE FURTHER METAL STRIP BY ROLL PROFILING

PROCÉDÉ DE FABRICATION D'UN FIL BRUT À PARTIR D'UNE PREMIÈRE BANDE MÉTALLIQUE ET D'AU MOINS UNE AUTRE BANDE MÉTALLIQUE PAR PROFILAGE SUR GALETS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.09.2021   Patentblatt 2021/38**

(73) Patentinhaber:
• **Stuth, Theodor**
  **41464 Neuss (DE)**
• **Mols, Andreas**
  **58739 Wickede (DE)**

(72) Erfinder:
• **Stuth, Theodor**
  **41464 Neuss (DE)**
• **Mols, Andreas**
  **58739 Wickede (DE)**

(74) Vertreter: **Cohausz Hannig Borkowski Wißgott Patentanwaltskanzlei GbR**
**Schumannstraße 97-99**
**40237 Düsseldorf (DE)**

(56) Entgegenhaltungen:
DE-A1- 19 916 234     DE-C2- 19 916 234
FR-A1- 2 974 528      US-A- 4 048 705
US-A- 4 203 188       US-A1- 2010 047 616

**Beschreibung**

Die Erfindung betrifft ein Verfahren zur Herstellung eines Rohdrahtes aus einem ersten Metallband und wenigstens einem weiteren Metallband durch Walzprofilieren, wobei das erste und das wenigstens eine weitere Metallband aus verschiedenen Metallen mit verschiedener Streckgrenze ausgebildet sind, wobei durch das Walzprofilieren mit mehreren Walzgerüsten in mehreren Stichen aus dem ersten Metallband ein Mantel geformt wird, der in der Endform das wenigstens eine weitere Metallband in der Umfangsrichtung umgibt, bevorzugt vollständig umgibt.

Bevorzugt unterscheiden sich die Streckgrenzen der verschiedenen Metalle um einen Faktor von mindestens 2, weiter bevorzugt um einen Faktor von mindestens 3, noch weiter bevorzugt um mindestens den Faktor 4.

Bevorzugt soll ein solcher Rohdraht als Schweißdraht oder thermischer Spritzdraht einsetzbar sein. Bevorzugt werden die Metallbänder von Coils abgewickelt. Der Rohdraht wird durch Walzprofilieren von Bändern hergestellt. Walzprofilieren wird auch als Rollformen bezeichnet. Dabei werden Metallbänder zwischen profilierten Rollen hindurchgeführt, wodurch die Profilierung auf die Metallbänder übertragen wird. Die Metallbänder mit den bevorzugt unterschiedlichen Streckgrenzen werden gemäß der Erfindung getrennt in den Rollformprozess eingebracht. Das als Mantel eingesetzte Metallband ist breiter als das wenigstens eine andere Metallband und wird vor der Verformung des wenigstens einen anderen Bandes mit bevorzugt i.d.R. geringer Streckgrenze alleine vorgeformt, insbesondere annähernd final eingeformt. Der erfindungsgemäß hergestellte Rohdraht kann auf ein gewünschtes Endmaß reduziert werden, z.B. durch Hämmern, Walzen, Streckreduzieren und/oder Ziehen.

Als Band mit der höheren Streckgrenze kann bevorzugt ein Nickelband, als Band mit der geringeren Streckgrenze kann bevorzugt ein Aluminiumband eingesetzt werden. Bevorzugt wird in diesem Fall für das Nickelband eine reine Qualität mit reduziertem Kohlenstoffgehalt verwendet, die es erlaubt, den NiAl-Verbund rekristallisierend zu glühen. NiAl-Spritzdrähte werden z.B. für hochtemperaturfeste Beschichtungen eingesetzt, u.a. als Bond Coat bei der Fertigung von Turbinenschaufeln.

Durch verzögertes Einbringen des Bandes mit der niedrigen Streckgrenze in den Rollformprozess werden die Längung dieses Bandes gegenüber dem anderen und damit die Gefahren eines Herausschiebens dieses Bandes aus dem entstehenden Draht und der Faltenbildung in diesem Band vermieden. Die bevorzugte Verarbeitung gecoilten Materials erlaubt die Herstellung langer Lauflängen. Dadurch wird das Auspressen des Bandes mit der niedrigen Streckgrenze aus dem Rohdraht bei Kalibrierung und weiterer Verformung verhindert. Um die stärkere Verformung des Materials mit der niedrigen Streckgrenze zu ermöglichen, werden u.a. durch Breitenbegrenzung dieses Bandes Freiräume bereitgestellt, die durch Querfluss gefüllt werden.


Stand der Technik

Walzprofilieren ist ein reines Biegeumformverfahren für ein einzelnes Metallband. Sollen mehrere Metallbänder gemeinsam verarbeitet werden, so werden nach dem bisherigen Stand der Technik plattierte Metallbänder verarbeitet, die sich weitgehend wie ein einzelnes Band verhalten.

Erhebliche Probleme entstehen, wenn unverbundene, geschichtete, Metallbänder gemeinsam profiliert werden sollen, insbesondere dann, wenn diese Metallbänder unterschiedliche Breiten aufweisen. Der Kern der Probleme ist die unterschiedliche Streckgrenze verschiedener Metalle, die bei einer unverbundenen gemeinsamen Verarbeitung zu Relativbewegungen, insbesondere zu einer unterschiedlichen Längung der verschiedenen Metallbänder führt.

Unter der Streckgrenze wird ein Werkstoffkennwert verstanden, der diejenige Spannung bezeichnet, bis zu der ein Werkstoff bei einachsiger und momentenfreier Zugbeanspruchung keine dauerhafte plastische Verformung zeigt, d.h. bei Unterschreiten der Streckgrenze kehrt das Material nach Entlastung elastisch in seine ursprüngliche Form zurück und bei Überschreiten der Streckgrenze verbleibt eine Formveränderung, bei einer Zugprobe also eine Verlängerung.

Für das Problem der Längung gibt es bisher keine Lösung. Noch problematischer ist es, durch Walzprofilieren von Metallbändern einen vollständig gefüllten drahtförmigen Querschnitt herzustellen, dessen Außenmantel ausschließlich aus einem der Verbundpartner besteht.

Die Publikation US 3,940,964 lehrt zur Herstellung eines stangenförmigen Körpers ein plattiertes Band aus Schichten gleicher Breite einzusetzen. Aus diesem Vormaterial kann kein voll gefülltes Profil und gleichzeitig ein allseits ummantelter Draht hergestellt werden. Das wird mit der Lehre dieser Publikation allerdings auch ausdrücklich nicht bezweckt.

Weiterhin beschreibt die US 2010/0047616 A1, welche die Basis für den Oberbegriff des Anspruchs 1 bildet, die Herstellung eines Bimetalldrahtes aus zwei geschichteten Bändern, bei denen in der hergestellten Endform das eine Metallband einen Mantel bildet, der das andere Metallband vollständig umgibt. In diesem Dokument wird vorgeschlagen, ein Aluminiumband auf ein breiteres Nickelband zu legen, beide Bänder von Anfang an gemeinsam zunächst U-förmig zu verformen und dann die in Breitenrichtung (senkrecht zur Längsrichtung) überstehenden Teile des Nickelbandes über die Enden des Aluminiumbandos zu schlagen und weiter einzurunden. Der derart hergestellte Rohdraht wird dann weiter zu einem Draht dünneren Querschnitts gezogen.

Das in der US 2010/0047616 A1 beschriebene Verfahren weist folgende Mängel auf:

1. Mischungsverhältnis von Aluminium und Nickel

Nach US 2010/0047616 A1 [0014] sollen die Nickel- und Aluminiumanteile im Querschnitt etwa gleich verteilt sein und das gleiche Volumen aufweisen. Aluminium und Nickel müssen aber in dem Verhältnis im Querschnitt des Drahtes vorliegen, wie es die durch thermisches Spritzen / Schweissen / Aufschmelzen entstehende Legierung verlangt.
Ein Standard für die NiAl- Legierung ist eine Zusammensetzung von Ni 80 wt.%/Al 20 wt.%. Das Gewichtsverhältnis ist in Flächenabmessungen der Bänder umzurechnen. Das wird in der Publikation jedoch nicht beschrieben.

2. Unterschiedliche Ausdehnung gemeinsam verarbeiteter verschiedener Metalle aufgrund deren unterschiedlichen Streckgrenzen

a. Bandeinlauf

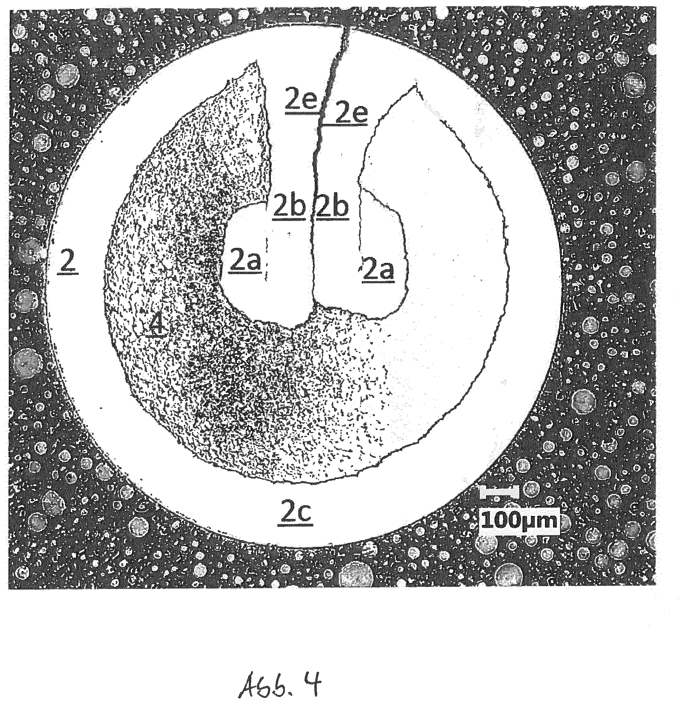

In US 2010/0047616 A1 wird vorgeschlagen, Aluminium und Nickel von Anfang an gemeinsam - als geschichtetes [0015] und [0016] oder plattiertes [0022] Material - zu verformen. Beide Metalle haben aber unterschiedliche Festigkeiten: Die Streckgrenze von weichgeglühtem Nickel der Standardqualität UNS N02200 liegt bei 100 MPa, die von weichgeglühtem Aluminium ENAW 1050 bei 20 MPa.
Zwar wird beim Walzprofilieren in erster Linie der Querschnitt definiert verformt; damit das Band stabil geführt werden kann, muß aber ein senkrecht wirkender Mindestdruck in der Dickenrichtung auf das Metallband ausgeübt werden. Der erforderliche Walzendruck ist materialabhängig: ein Druck, der ausreichend ist, Nickel stabil zu führen, führt bei dem weicheren Aluminium bereits zu einer Dickenreduktion. Beim Rollformen wird die zur gewünschten Materialverformung notwendige Energie von den Arbeitswalzen über die Werkzeuge (Rollen) durch Druck auf das Metallband übertragen. Das bedeutet, dass der Druck zwischen Ober- und Unterwerkzeug und Metallband so groß sein muss, dass das Material des Metallbandes in die Werkzeuge gezogen wird und an den gewünschten Umformpunkten über seine Streckgrenze hinweg verformt werden kann.
Werden nun zwei oder noch mehrere geschichtete Metallbänder mit unterschiedlichen Streckgrenzen verformt, so kann die einzubringende Verformungsenergie nur so hoch sein, wie es die Festigkeit des Materials des Metallbandes mit der geringsten Streckgrenze zuläßt.
In einer Übergangszone zwischen dem noch möglichen Werkzeugdruck auf das weichere Material und gleichzeitiger Erzielung des notwendigen Druckes zur Verformung des härteren Materials würde das weichere Material seine Dicke reduzieren und sich vor den Werkzeugen kontinuierlich längen oder aufstauchen.
Kann jedoch das weichere Material nicht mehr die erforderliche Verformungsenergie für das härtere Material übertragen, würde dieses seine Dicke stark reduzieren und sich opfern. Die Reibung zwischen Werkzeug und Metallband ginge verloren und der Walzprozess käme zum Erliegen. Die Werkzeugrollen würden auf dem "stehenden" Verbund durchrutschen.
Eine Dickenreduktion äußert sich beim Walzen von Metallbändern kaum als Breitenänderung, vielmehr löst das verdrängte Material eine Längenänderung des Metallbandes aus. Längenänderungen von gemeinsam verarbeiteten geschichteten Metallen unterschiedlicher Festigkeit führen zum Herausquetschen des weicheren Metallbandes oder zur Faltenbildung (Dopplung) im weicheren Band. Falten machen die vorgesehene Verformung in den nachgelagerten Walzgerüsten unmöglich. Beide Phänomene verhindern die Einhaltung eines angestrebten Mischungsverhältnisses, da sich dieses durch die Materialverlagerung zwangsläufig im Querschnitt ändert.
Um die Auswirkungen von unterschiedlichen Längenänderungen zu vermeiden, kann das Aluminiumband beim Einlauf in die Profilieranlage gebremst oder unter Zugspannung gesetzt werden. Ein Rückzug kann aber nur vor dem Einlauf in das erste Walzgerüst aufgebracht werden. Damit wird zwar eine Dopplung im ersten Walzgerüst vermieden, in den weiteren Gerüsten sind unterschiedliche Längenänderungen aber nicht mehr kompensierbar. Es besteht daher die Gefahr, daß die auftretenden unterschiedlichen Längenänderungen der beiden Bänder beim Walzprofilieren zu Überlappungen des weicheren Materials führen. Sowohl unterschiedliche Längenänderungen als auch Überlappungen verändern das Mischungsverhältnis zwischen Aluminium und Nickel im Querschnitt; ein Draht mit unkalkulierbar schwankenden Mischungsverhältnissen ist für den beabsichtigten Zweck nicht einsetzbar.
Eine Lösung zur Vermeidung der unterschiedlichen Längung von Nickel und Aluminium ist auch nicht, wie in [0016] und Fig. 4 vorgeschlagen, die überstehenden Nickelseiten über den Aluminiumstreifen zu biegen und ihn damit festzuhalten. Wenn das Aluminiumband frühzeitig im Profilierprozess eingeklemmt wird, führen die unterschiedlichen Längenänderungen von Nickel und Aluminium zu Zugspannungen, die so groß sein können, daß das Aluminiumband zunächst Spannungsrisse zeigt und schließlich zerreißt. Bei der Risikobewertung ist zu bedenken, daß die Herstellung eines Rohdrahtes etwa 20 Verformungsstationen erfordert.

b. Rohdraht

Bei einem gegebenen auf den Verbund beider Metallbänder ausgeübten Druck, der die Streckgrenze des weicheren Metalls überschreitet, verformen sich das weichere und das härtere Metall unterschiedlich. Diese unterschiedliche Verformung wird nicht dadurch vermieden, daß ein geschlossener Rohdraht produziert wird. Nach US 2010/0047616A1 [0015] sollen die beiden zu verarbeitenden Metalle geschichtet werden. Wenn die Metalle vor Beginn der gemeinsamen Verarbeitung geschichtet werden, ist die verarbeitbare Länge begrenzt. Versuche, die der Herstellung von 6 m langen Rohdrähten dienten, haben ergeben, daß die Aluminiumeinlage zwischen 7,5 und 11,5 cm aus dem Rohdrahtende herausgeschoben wurde. Dadurch ändert sich die Zusammensetzung zwischen Ni und Al im Rohdraht signifikant und unkalkulierbar.

Anders als in US 2010/0047616A1 [0018] beschrieben, füllt das Aluminium nicht nur Leerstellen, es längt sich vielmehr vor allem gegen die Verarbeitungsrichtung.

3. Dicke des Ausgangsmaterials und Notwendigkeit von Zwischenglühungen

a. Rohdrahtabmessungen gemäß US 2010/0047616 A1

Der durch Profilieren hergestellte Rohdraht hat einen Durchmesser von 6,35 bis 7,62 mm (US 2010/0047616 A1 [0017]). Erweist noch keinen vollständig gefüllten Querschnitt auf (vgl. Fig. 5 in US 2010/0047616 A1) und muß durch Hämmern, Walzen oder Ziehen auf 2,381 mm bis 3,175 mm reduziert und dadurch verdichtet werden (US 2010/0047616 A1 [0018]). Eine Reduktion des Durchmessers um ca. 50% führt aber bereits zu einer Flächenreduktion von über 80%.

| Ausgangsdurchmesser | Enddurchmesser | (Flächen-) Reduktion |
|---|---|---|
| mm | mm | % |
| 7,62 | 3,18 | 82,58 |
| 6,35 | 2,38 | 85,50 |

Durch die Reduzierung wird der Draht härter. Bei einer Reduktion von mehr als 80% ist das Formänderungsvermögen des Verbunddrahtes erschöpft. Der Verbunddraht ist dann so hart, daß er - jedenfalls in den üblichen Geräten - mangels Flexibilität nicht mehr durch ein Schlauchpaket des Schweißgerätes gefördert werden kann.

Selbst wenn ein aus Nickel- und Aluminiumbändern bestehender thermischer Spritzdraht nach der Lehre von US 2010/0047616 herstellbar wäre, - was nicht der Fall ist -, so könnte er nicht mehr zum thermischen Spritzen eingesetzt werden.

Durch die Verdichtung des Rohdrahtes und das Ziehen auf Endabmessung wird der Draht härter. Um ihn einsetzbar, d.h. weich zu machen, müsste der Draht geglüht werden. Glühen ist aber in US 2010/0047616 A1 aus guten Gründen nicht vorgesehen:

Die Rekristallisationstemperatur von Nickel (690 °C bis 720 °C) überschreitet die Schmelztemperatur von Aluminium (650 °C). Sobald schmelzflüssiges Aluminium mit Nickel in Kontakt kommt, wird eine exotherme Reaktion ausgelöst, die zu einer derartigen Aufheizung des Verbundes führt, daß auch das Nickel schmilzt. Der Verbunddraht gemäß US 2010/0047616 A1 läßt sich also nicht weichglühen.

b. Rohdraht geringerer Dicke

Nach Erfahrungen der Erfinder muß der Querschnitt des Rohdrahtes nur 20% größer sein als die durch Kalibrieren und Reduzieren verdichtete und vollständig gefüllte Abmessung. Die hohen Reduktionsprozentsätze, die sich aus der Darstellung in US 2010/0047616 A1 [0017] und [0018] ergeben, sind nicht erforderlich, wenn dünnere Ausgangsbänder eingesetzt werden und bevorzugt damit ein rekristallisierendes Glühen vermeiden werden kann:

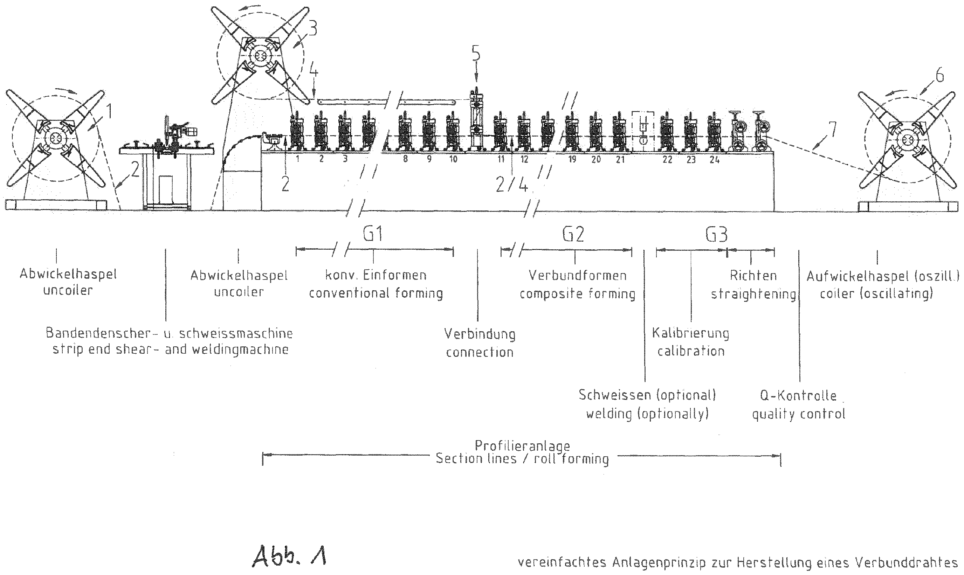

Der horizontale Querschnitt des in Fig. 1 von US 2010/0047616 A1 gezeigten Drahtes besteht aus 10 klappsymmetrisch angeordneten etwa gleich dicken Schichten: 6 aus Ni und 4 aus Al.

Unterstellt man, daß alle Schichten gleich dick sind, ergibt sich die Dicke des Ausgangsmaterials:

| Endabmessungen von thermischen Spritzdrähten | | Querschnitts -reduktion | Rohdrahtabmessungen | | Schichtdicke | Reduktion |
|---|---|---|---|---|---|---|
| Durchmesser | Fläche | erforderlich | Durchmesser | Fläche | Dicke | |
| mm | mm² | % | mm | mm² | mm | % |
| 1,6 | 2,01 | 20 | 2,0 | 3,14 | 0,2 | 56,25 |
| 2,38 | 4,448 | 20 | 2,975 | 6,95 | 0,2975 | 56,25 |
| 3,2 | 8,04 | 20 | 4,0 | 12,57 | 0,4 | 56,34 |
| 6,4 | 32,17 | 20 | 8,0 | 50,27 | 0,8 | 56,60 |

Auch die Verwendung dünnerer Metallbänder löst aber die Probleme nicht:
Die Metallbänder dürfen nicht zu dünn sein: Für eine stabile Bandführung in Profilwalzgerüsten ist eine gewisse Mindestdicke des Metallbandes erforderlich. Die Mindestdicke ist materialabhängig, sie beträgt ca. 0,2 mm bei Stahl, bei weicheren Materialien mehr. Geschichtete Metallbänder werden nicht mit ihrer Gesamtdicke angesetzt, sondern mit den Einzeldicken, da sich geschichtete Metallbänder so verhalten, wie die Einzelbänder, aus denen der Schichtstapel besteht. Das liegt daran, daß sich Schichtstapel wie Einzelbänder verhalten, solange sie sich gegeneinander verschieben können.

Die Verwendung dünner Metallbänder ist aber nicht nur technisch anspruchsvoll, sie ist auch unwirtschaftlich, da zunächst dünne Ausgangsbänder gewalzt werden müssen und dann große Längen zu profilieren sind. Die Reduktion eines aus dickeren Metallbändern bestehenden Verbundes durch Walzen oder Ziehen ist vergleichsweise erheblich preiswerter; solche Operationen sind ohnehin zur Verdichtung erforderlich.

Der im Durchmesser 1,6 mm messende Draht läßt sich demnach durch Walzprofilieren nicht herstellen. Alle Drähte mit größerem Durchmesser lassen sich durch Walzprofilieren herstellen, die ca. 56%ige Reduktion macht sie aber zu hart für eine Förderung durch ein Schlauchpaket bei der bevorzugten Anwendung. Zu berücksichtigen ist, daß durch das Einbiegen der überstehenden Teile des Nickelbandes Stege im Drahtinneren entstehen, die dazu führen, daß der Verbunddraht erheblich schwerer zu verbiegen ist, als ein gleich dicker Massivdraht.

4. Da in den aus Nickel bestehenden hakenförmig eingedrehten Bandenden Aluminium eingelagert ist, besteht das Zentrum des Drahtes nicht alleinig aus Nickel.

Gem. US 2010/0047616, Fig. 1 werden die in Breitenrichtung überstehenden Teile des Nickelbandes auf das eingelegte Aluminiumband zurückgebogen, um es festzuklemmen. Durch die frühzeitige Klemmung, bevor die Verarbeitung des Mantels abgeschlossen ist, wird das Aluminiumband unter Scherspannung gesetzt und kann reißen. Dadurch verändert sich die Zusammensetzung im Querschnitt.

5. Der in US 2010/0047616 Fig. 1 dargestellte Querschnitt ist durch Walzprofilieren nicht wie beschrieben herstellbar

Fig. 5 der US 2010/0047616 zeigt ein bereits geschlossenes Profil, das durch Walzprofilieren nicht mehr zu dem in Fig. 1 gezeigten Profil weiterentwickelt werden kann, da die Profilrollen für die weitere Verformung nur noch von außen einwirken können. Um den in Fig. 1 gezeigten Querschnitt herstellen zu können, müssten ausgehend von Fig. 5 die Außenkanten des Nickelbandes zusätzlich um 90° im bereits geschlossenen Profil abgewinkelt werden. Das ist durch Walzprofilieren nicht möglich. Bei Druck von außen werden sich vielmehr die Außenkanten des Nickelbandes in die Aluminiumschicht bohren und das Aluminium abscheren.

Das durch Walzprofilieren herzustellende Rohdrahtprofil gem. Fig. 1 kann auch nicht aus Fig. 4 hergestellt werden, da das Außenband nicht um 90°, geschweige denn - wie erforderlich - um 180° eingeformt werden kann: zur Einformung fehlt der Gegenhalt von innen.

Mit dem in US 2010/0047616 A1 beschriebenen Verfahren läßt sich daher dessen Aufgabenstellung nicht lösen; die Grundidee der Herstellung eines Rohdrahtes aus Bändern stellt allerdings einen Ansatz dar, der mit der vorliegenden Erfindung weiterentwickelt wird.

Zur Herstellung von Rohdraht aus Kern und Mantel wird weiterhin hingewiesen auf die Dokumente US 4 203 188 A, US 4 048 705 A, FR 2 974 528 A1 und DE 199 16 234 A1

## Aufgabenstellung

Werden Bänder, deren Breite ein Vielfaches ihrer Dicke, insbesondere mindestens ein 5-faches, weiter bevorzugt mindestens ein 10-faches ihrer Dicke beträgt, durch senkrecht wirkenden Druck verformt, führt diese Verformung fast ausschließlich zu Längenänderungen und nicht zu Breitenänderungen. Um einen Draht definierter Zusammensetzung aus zwei oder mehr Metallbändern, insbesondere solchen mit unterschiedlichen Streckgrenzen herzustellen, muß die relativ stärkere Längung des Metallbandes mit der niedrigeren Streckgrenze vermieden werden.

Es ist somit eine Aufgabe der Erfindung eine solche stärkere Längung eines der Metallbänder gegenüber dem anderen zu reduzieren, bevorzugt zu vermeiden. Weiter bevorzugt soll ein Verfahren zur Rohdrahtherstellung bereitgestellt werden, bei dem ein Rohdraht entsteht, dessen Kern zumindest überwiegend aus dem Material ausgebildet ist, das auch den Mantel des Rohdrahtes bildet.

Weiterhin soll in einer bevorzugten Anwendung ein aus Nickel- und Aluminiumbändern herzustellender thermischer Spritzdraht bevorzugt noch die folgenden Anforderungen erfüllen:

- die Metalle sollen nicht als Pulver, sondern als Bänder vorliegen Zur Herstellung von NiAl-Spritzdraht wird vielfach Aluminiumpulver in einen Mantel aus Nickel gefüllt. Da die Oberfläche von Pulver größer ist als die Oberfläche von Band, wird über Pulver mehr Oxid eingetragen als durch Band. Der Einsatz von Pulver ist deshalb nachteilig. Aluminiumpulver ist außerdem pyrophor, sobald die Pulvergröße 500 μm unterschreitet Pulver hat den weiteren Nachteil, daß es fließt, so daß eine exakte Zusammensetzung des Querschnitts aus Mantel und eingefülltem Pulver nur schwer zu kontrollieren ist.

- die Bänder sollen nicht als Legierung, sondern als Komponenten der Legierung eingebracht werden Eine Legierung von 80 wt.% Nickel und 20 wt. % Aluminium schmilzt bereits bei 1.362 °C. Nickel schmilzt erst bei 1.455 °C. Auf den ersten Blick scheint es daher vorteilhaft als thermischen Spritzdraht eine Legierung einzusetzen. Der besondere Vorteil des Spritzens eines Verbunddrahtes liegt darin, daß die exotherme Reaktion von Al mit Ni erst beim Aufschmelzen unmittelbar beim thermischen Spritzen stattfindet. Die dadurch erhöhte Temperatur führt zu einer guten Verbindung der gespritzten Schicht mit dem Substrat. Eine Vorbehandlung des Substrates zur Verbesserung der Haftung kann sich u.U. erübrigen.

- die unterschiedlichen Festigkeiten von Nickel und Aluminium dürfen bei der Verarbeitung zu einem Draht nicht zu unterschiedlichen Längungen und damit einer Änderung des Mischungsverhältnisses führen

- der Verbund soll bevorzugt rekristallisierend geglüht werden können Der Draht soll bevorzugt formstabil sein, d.h. er darf nicht so weich sein, daß er beim Fördern abknickt. Andererseits darf er auch nicht so hart sein, daß er sich nicht mehr fördern läßt. Die Härte des Verbunddrahtes soll daher bevorzugt durch Verformen und Glühen eingestellt werden können. Beim Glühen darf keine exotherme Reaktion eintreten.

- Aufbau des Querschnitts aus Nickel- und Aluminiumschichten Eine hohe Oberflächenrauigkeit, wie sie z.B. Aluminium aufgrund der Oxidschicht aufweist, führt zu schnellem Verschleiß des Schlauchpaketes. Deshalb sollte bevorzugt die Außenschicht des Verbunddrahtes aus Nickel bestehen. Das Zentrum des Drahtes sollte ebenfalls aus Nickel bestehen, um eine frühzeitige Klemmung des Aluminiumbandes zu vermeiden.

- der Profilquerschnitt soll bevorzugt voll gefüllt sein In dieser bevorzugten Ausführung sollen keine Hohlräume verbleiben, weil Luft bei Erhitzung die verbundenen Metalle oxidieren würde.

**Begriffe**

Als "Rohdraht" wird der aus mindestens zwei Metallbändern gebildete Verbunddraht bezeichnet, der durch Walzprofilieren hergestellt wird.

Der Begriff "Nickel" bezeichnet in bevorzugter Auslegung Nickelqualitäten mit einem Reinheitsgrad mind. 99,6 wt.% und einem Kohlenstoffgehalt von max. 0,02 wt.%.

Der Begriff "Aluminium" soll auch Aluminiumlegierungen einschließen, insbes. Zusätze von seltenen Erden, die den Hochtemperaturschutz fördern.

Unter W-Profilierung wird eine Querschnittsform des Metallbandes im Querschnitt senkrecht zur Längsrichtung verstanden, die dem Buchstaben "W" ähnelt. Insbesondere ergibt sich diese - bei Aufsicht - durch eine Aufwölbung, insbesondere konvexe Einformung / des Metallbandes zwischen zwei seitlichen aufstehenden Schenkeln des Metallbandes.

**Beschreibung der Erfindung**

Erfindungsgemäß wird die Aufgabe dadurch gelöst, dass bei einem Herstellungsverfahren der eingangs genannten Art mit einer ersten Gruppe von Walzgerüsten in mehreren Stichen zunächst ausschließlich nur das erste Metallband zu einer Vorform geformt wird und hiernach in einer zweiten Gruppe von Walzgerüsten das erste und das wenigstens eine weitere Metallband gemeinsam zur Endform geformt werden, wobei mit den Walzgerüsten der ersten Gruppe zur Formung des ersten Metallbandes in die Vorform aus dem ersten Metallband betrachtet im Querschnitt senkrecht zur Längsrichtung des Metallbandes eine Trogform geformt wird und hiernach in das Innere der Trogform mit Kontakt zum Bodenbereich der Trogform das wenigstens eine weitere Metallband eingeführt wird, wonach das erste und das wenigstens eine weitere Metallband in klemmender Verbindung miteinander durch die zweite Gruppe von Walzgerüsten gemeinsam geformt werden.

Die Erfindung geht hier davon aus, dass die Formgebung der wenigstens zwei Metallbänder, also des ersten und dem wenigstens einen weiteren Metallband durch eine Vielzahl von Stichen erfolgt, die mittels einer Vielzahl von Walzgerüsten durchgeführt werden, insbesondere mit je einem Walzgerüst pro Stich.

Die Gesamtanzahl aller an der erfindungsgemäßen Umformung teilnehmenden Walzgerüste ist erfindungsgemäß in zwei Gruppen aufgeteilt. Eine erste Gruppe verformt ausschließlich nur alleinig das erste Metallband, welches den späteren Mantel des Rohdrahtes bildet und die zweite Gruppe von Walzgerüsten verformt alle Metallbänder gemeinsam, die den Rohdraht bilden. Zwischen der ersten und zweiten Gruppe wird das wenigstens eine weitere Metallband zum ersten Metallband hinzugefügt. Prozesstechnisch kann das wenigstens eine weitere Metallband vom Coil / Haspel über die erste Gruppe von Walzgerüsten ohne Bearbeitung hinweggeführt werden und dann nach unten und zusammen mit dem ersten Metallband in die zweite Gruppe eingeführt werden. Der Haspel für das weitere Metallband kann auch über der ersten Gruppe von Walzgerüsten aufgestellt werden, so daß das weitere Metallband direkt in das erste Gerüst der zweiten Gruppe von Walzgerüsten eingebracht werden kann. In beiden Fällen kann das Band zweckmäßigerweise über ein S-Gerüst geführt werden.

Diese Auftrennung ermöglicht es mit der ersten Gruppe von Walzgerüsten solche Drücke nur auf das erste Metallband auszuüben, die bei Ausübung auf das wenigstens eine weitere Metallband zu einer Längung dieses wenigstens einen Metallbandes gegenüber dem ersten führen würden. Durch die teilweise Separierung der Verformungsschritte, wird somit diese Längung vermieden, die insbesondere auftritt, wenn Metallbänder mit verschiedener Streckgrenze in den Rohdraht integriert werden.

Die teilweise Trennung der Umformungsprozesse von erstem Metallband alleine und der nachfolgenden gemeinsamen Umformung ist jedoch auch vorteilhaft, wenn die Metalle gleiche oder ähnliche Streckgrenzen aufweisen, denn auch bei gleicher oder ähnlicher Streckgrenze können sich gemeinsam verarbeitete Bänder gegeneinander verschieben. Zudem ist es einfacher, das Profil des Mantels getrennt einzuformen.

Die unterschiedliche Längung von Bändern tritt auf, wenn Bänder unterschiedlicher Festigkeit gemeinsam verarbeitet werden. Die unterschiedliche Längung von verschiedenen Metallbändern, z.B. von Nickel und Aluminium aufgrund ihrer unterschiedlichen Festigkeiten kann erfindungsgemäß dadurch vermieden werden, daß die gemeinsame Verarbeitung herausgezögert wird, bevorzugt erst in der hinteren Hälfte aller Bearbeitungsstufen, insbesondere aller Stiche der Walzgerüste der zweiten Gruppe erfolgt.. Zu diesem Zweck wird das wenigstens eine weitere Metallband, insbesondere das Aluminiumband in Gegensatz zur Lehre der US 2010/0047616 A1 nicht bereits vor dem ersten Stich auf das erste Metallband, insbesondere Nickelband gelegt, sondern erst um mehrere Stiche, insbesondere möglichst viele Stiche versetzt in das bereits im Querschnitt zur Vorform geformte, erfindungsgemäß trogförmig ausgebildete erste Metallband, bevorzugt Nickelband. Das bevorzugt festere erste Metallband wird also zunächst alleinig getrennt vom zweiten Metallband verformt.

Daß sich Metalle mit geringerer Streckgrenze bei gleichem Druck stärker verformen als solche mit höherer Streckgrenze bzw. sich bereits bei geringerem Druck verformen, ist physikalisch bedingt und kann bei gemeinsamer Verarbeitung nicht vermieden werden. Die Erfindung sieht daher die Trennung der Bearbeitungsstufen der unterschiedlichen Werkstoffe der Metallbänder vor.

Vor der Verbundherstellung der unterschiedlichen Werkstoffe wird das den Mantel bildende Metallband, insbesondere das festere Metallband, bevorzugt das Nickelband, demnach erfindungsgemäß separat verformt, nämlich mit der ersten Gruppe von Walzgerüsten.

Erfindungsgemäß ist vorgesehen, dass mit den Walzgerüsten der ersten Gruppe zur Formung des ersten Metallbandes in die Vorform aus dem ersten Metallband betrachtet im Querschnitt senkrecht zur Längsrichtung des Metallbandes eine Trogform geformt wird, insbesondere mit seitlichen Trogformschenkeln und einem diese verbindenden Trogformboden. Die Trogform wird dabei im Querschnitt senkrecht zur Längsrichtung des Metallbandes betrachtet. Die Trogform kann auch im Wesentlichen als, insbesondere modifizierte U-Form verstanden werden.

Hiernach sieht es die Erfindung vor, dass in das Innere der Trogform mit Kontakt zum Bodenbereich der Trogform das wenigstens eine weitere Metallband eingeführt wird, wonach das erste und das wenigstens eine weitere Metallband in klemmender Verbindung miteinander durch die zweite Gruppe von Walzgerüsten gemeinsam geformt werden.

Die Klemmung kann dabei z.B. dadurch erfolgen, dass das eingeführte wenigstens eine weitere Metallband mittels wenigstens einer Rolle des jeweiligen Walzgerüstes auf den Bodenbereich der Trogform gedrückt wird. Die Klemmung kann auch, insbesondere nachfolgend, dadurch erfolgen, dass das wenigstens eine weitere Metallband von ersten Metallband klemmend gehalten wird.

Die Trogform bildet eine offene Vorform des späteren geschlossenen Mantels des Rohdrahtes, wodurch ersichtlich ist, dass mit dieser Ausführung die Mantelbildung schon zu einem großen Teil vollzogen ist, bevor das wenigstens eine weitere Metallband in den Umformungsprozess eingeführt wird.

Die Erfindung kann hier bevorzugt vorsehen, dass die Trogform geformt wird durch Umformungen des, bevorzugt zunächst planen, ersten Metallbandes mittels Umbiegen der beiden sich (in Breitenrichtung des Metallbandes) gegenüberliegenden Bandkanten des ersten Metallbandes jeweils um 180 Grad auf die Oberfläche des Metallbandes, insbesondere Umbördeln der Bandkanten. Die Bandkanten werden damit faktisch zurück auf sich selbst umgebogen. Bevorzugt ergibt sich dabei zwischen den umgebogenen und sich selbst kontaktierenden Bereichen der Bandkanten kein Abstand/Hohlraum. Die umgebogenen Bandkanten weisen damit bevorzugt die doppelte Ursprungsdicke des Metallbandes auf.

Weiterhin erfolgt die Trogformung durch Formung von zwei aufstehenden Schenkeln durch Umbiegen der beiden sich (in Breitenrichtung) gegenüberliegenden Seitenbereiche des ersten Metallbandes, insbesondere jeweils um 90 Grad plus/minus 15 Grad aus der ursprünglichen Metallbandebene, wobei die beiden Schenkel seitliche äußere Wände der Trogform und ein die Schenkel verbindender Bereich einen Boden der Trogform bildet.

Die beiden hier benannten Umformschritte können in beliebiger Reihenfolge erfolgen, es ist jedoch bevorzugt, das "Auf-sich-selbst-Umbiegen" der Bandkanten zuerst auszuführen.

Die Breite der beidseitigen Umlegung der Bandkanten um 180° auf sich selbst definiert bereits das später gewünschte vom Mantelmaterial gebildete Kernvolumen des Rohrdrahtes.

Die anschließende Hochstellung der Bandkanten zu aufstehenden seitlichen Schenkeln, insbesondere um bevorzugt weitere 90°, bildet im Querschnitt senkrecht zur Längserstreckung den genannten Trog in den das zweite Metallband eingelegt werden kann. Insbesondere einschließlich der nachfolgenden Einformung der Trogflanken/-schenkel, entspricht bereits annähernd der finalen Geometrie des Rohrdrahtes.

Erst vor der Biegung der Trogschenkel in Richtung zum Troginneren wird das zweite Metallband, bevorzugt Aluminiumband in das trogförmig gebogene, weiter bevorzugt dabei W-geformte, erste Metallband eingelegt.

Bezogen auf das in den Figuren dargestellte Ausführungsbeispiel wird in Abbildung 1 das wenigstens eine weitere Metallband, bevorzugt Aluminiumband erst in Station 11 in das bereits trogförmig geformte erste Metallband, bevorzugt Nickelband-Profil gefügt. Da das erste Metallband, insbesondere Nickelprofil weitgehend fertig gewalzt und hier bevorzugt W-förmig eingeformt ist, werden für die Bandführung keine hohen Kräfte mehr auf das wenigstens eine weitere Metallband / Aluminiumband ausgeübt, die es in seiner Dicke reduzieren und überproportional längen würden.

Technisch kann die verzögerte Zufuhr des wenigstens einen weiteren / zweiten Metallbandes, insbesondere des Aluminiumbandes dadurch bewirkt werden, daß der Ablauf mit dem Aluminiumband über der Profilieranlage positioniert wird (vgl. Abbildung 1). Das von diesem Haspel abgewickelte Band wird bevorzugt in einem S-förmigen Weg über Rollen in den Profilierprozess von oben eingeschleust. Der Ablaufhaspel kann auch vor dem Haspel aufgestellt werden, von dem das erste Metallband, insbesondere das Nickelband abgewickelt wird.

Die Erfindung kann weiterhin eine Begrenzung des zur Bandführung erforderlichen senkrechten Walzendrucks bei Zuführung des wenigstens einen weiteren / zweiten Metallbandes, insbesondere des Aluminiumbandes, vorsehen.

Es kann vorgesehen sein, ein Ausweichen des wenigstens einen weiteren / zweiten Metallbandes, insbesondere des Aluminiumbandes quer zum Bandlauf zu verhindern.

Dafür kann es die Erfindung vorsehen, dass das wenigstens eine weitere, insbesondere das zweite Metallband / Aluminiumband bei seiner Zuführung in die Trogform durch eine darüber angeordnete Werkzeugrolle zentriert wird, wobei das wenigstens eine weitere Metallband im Wesentlichen nur seitlich geführt wird, d.h. nur mit einem solchen Druck auf das erste Metallband / Nickelband zentriert wird, der keine Längung des wenigstens einen weiteren Metallbandes bewirkt.

Dabei kann es konvex durch das erste Metallband / Nickelband eingeformt werden, sofern die bevorzugte, nachfolgend noch beschriebene, aber nicht zwingende W-Formung im ersten Metallband vorliegt.

Eine Längung des wenigstens einen weiteren Metallbandes, insbesondere des Aluminiumbandes bei seiner Zuführung und Zentrierung wird somit gänzlich vermieden.

Bänder sind durch ein hohes Breiten- zu Dickenverhältnis gekennzeichnet. Wird auf Bänder Druck ausgeübt, führen die senkrecht wirkenden Kräfte zu einer Längung. Die Breite ändert sich allenfalls minimal. Werden zwei Bänder mit unterschiedlicher Streckgrenze gemeinsam verarbeitet, längt sich das weichere Band stärker als das härtere. Entgegen Fig. 4 der US 2010/0047616 A1 sieht es daher die Erfindung vor, dass das wenigstens eine weitere Metallband, bevorzugt das Aluminiumband, deshalb erst nach der Bildung der Vorform des ersten Metallbandes, insbesondere somit also nicht frühzeitig im Profilierprozess eingeklemmt wird; dadurch können sonst zu große Kräfte in Längsrichtung vermieden werden, die ansonsten ein Abscheren des wenigstens einen weiteren Metallbandes, bevorzugt des weicheren Aluminiums zur Folge haben könnte.

Um die beabsichtigte Endform zu erreichen, sieht es die Erfindung vor, dass das ersten Metallband, bevorzugt das Nickelband auf das zweite Metallband, bevorzugt das Aluminiumband angedrückt wird. Dafür werden die Schenkel des aus dem ersten Metallband gebildeten Troges in Richtung zum Troginneren umgebogen und kontaktieren hiernach mit den auf sich selbst zurückgebogenen Bandkanten die äußeren Bandbereiche des wenigstens einen weiteren Metallbandes. Das wenigstens eine weitere Metallband, insbesondere Aluminiumband wird durch die eingefalteten Bandkanten des ersten Metallbandes, insbesondere des Nickelbandes geklemmt und dadurch in seiner zentrierten Ausrichtung fixiert. Bevorzugt kann so auch mit der Erfindung bewirkt werden, dass durch die Klemmung das erste Metallband auch die Bandführung des wenigstens einen weiteren, insbesondere des zweiten Metallbandes übernimmt und der durch die Werkzeugwalzen ausgeübte Druck zumindest im Wesentlichen nur, oder zumindest überwiegend auf das erste Metallband einwirkt.

Die Erfindung kann ein Ausquetschen von Material des wenigstens einen weiteren Metallbandes, bevorzugt von Aluminium aus dem Rohdraht verhindern.

Die zuvor beschriebenen Techniken, eine im Vergleich zum ersten Metallband, insbesondere Nickelband, überproportionale Längung des wenigstens einen weiteren Metallbandes, insbesondere des Aluminiumbandes zu verhindern, greifen dann nicht mehr, wenn ein geschlossenes Drahtprofil erreicht ist, insbesondere wenn bereits für eine bevorzugt nachfolgende Kalibrierung des Rohdrahtes ein von allen Seiten gleichmäßiger Druck auf den erfindungsgemäß hergestellten Rohdraht ausgeübt wird. Bei einem gegebenen auf den Verbund ausgeübten Druck, der die Streckgrenze des weicheren Metalls überschreitet, verformen sich die Metalle beider Bänder, insbesondere von Ni und Al, unterschiedlich. Die unterschiedliche Verformung äußert sich bei den gegebenen Banddimensionen fast ausschließlich als unterschiedliche Längung. Diese unterschiedliche Längung wird nicht dadurch vermieden, daß der Rohdraht bereits ein geschlossenes Profil aufweist. Trotz Klemmung des wenigstens einen weiteren Metallbandes, insbesondere des Aluminiumbandes durch das erste Metallband wird dieses bei Verformung des Verbunddrahtes aus dem Drahtende herausgepreßt. Bei Aluminium und Nickel kann so bei bis ca. 6 m langen Stäben das weichere Aluminium bei Verformung des Verbunddrahtes 7,5 bis 11,5 cm aus dem Drahtende herausgepreßt werden.

Die Erfindung kann es vorsehen, in den Boden der Trogform eine in das Innere der Trogform weisende Ausbauchung, bevorzugt konvexe Ausbauchung einzuformen, insbesondere zur Bildung einer W-förmigen Trogform. Das wenigstens eine weitere Metallband, das mit Kontakt zum Boden der Trogform zentriert in den Trog eingeführt wird kann in dieser Ausführung dann über die konvexe Ausbauchung herübergebogen werden. Hierdurch wird eine Zentrierung des wenigstens einen weiteren Metallbandes in der Trogform des ersten Metallbandes sichergestellt.

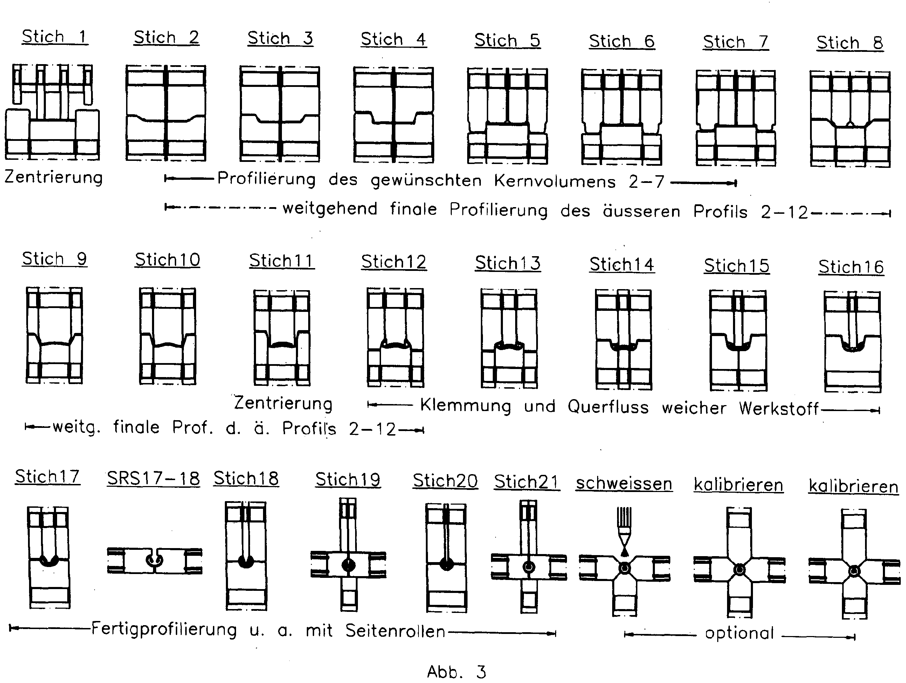

Eine solche konvexe Einformung beider Bänder, insbesondere des Nickel- und Aluminiumbandes erscheint zunächst kontraintuitiv, da das Verbundband konkav eingeformt werden muß, um einen drahtförmigen Querschnitt zu erreichen. In US 2010/0047616 A1 wird daher in naheliegender Weise das Profil auch sofort konkav eingeformt (vgl. [0016] und Fig. 3).

Die W-Formung ist bevorzugt gebildet durch eine vorübergehende konvexe Einformung/ Ausbauchung des Trogbodens des den Mantel bildenden Metallbandes im Bereich zwischen den seitlichen Schenkeln.

Der Einsatz der W-Formung scheint zunächst für die Herstellung des Rohdrahtes aus zwei Gründen nachteilig zu sein:

Für die Durchführung der W-Formung sind zusätzlich mindestens zwei Walzgerüste, insbesondere Breakdown-Gerüste erforderlich. Die zusätzlichen Gerüst- und Werkzeugkosten machen den Profilierprozess teurer.

Durch die Wechselbiegung wird das Metallband stärker kalt verfestigt. Dadurch wird das Gesamtformänderungspotential früher ausgeschöpft und ggf. eine vorzeitige oder sogar zusätzliche Glühung erforderlich.

Für die Herstellung des Verbunddrahtes ist eine W-Formung von den benötigten Seitenkräften her eigentlich nicht erforderlich; aus den oben genannten Gründen würde man deshalb darauf verzichten. Der Verbunddraht kann grundsätzlich auch mit einem ebenen Boden des zum Trog geformten, den Mantel bildenden Metallbandes hergestellt werden.

Die W-Formung kann bevorzugt, aber nicht zwingend bei der Herstellung des Verbunddrahtes eingesetzt werden. Weiter bevorzugt wird das zweite Metallband, insbesondere das Aluminiumband über dem konvex eingeformten ersten Metallband (Mantelband) ebenfalls konvex eingeformt. Dafür kann das zweite Metallband auf die die W-Form bewirkende Ausbauchung im Trog des ersten Metallbandes aufgelegt und die Seiten des zweiten Metallbandes heruntergedrückt werden, wodurch die konvexe Einformung auch des zweiten Bandes resultiert. Die konvexe Einformung erfolgt bevorzugt durch eine von oben eingreifende Walze, vgl. Abb. 3 Stich 11. Das führt nicht nur zur Zentrierung des zweiten Metallbandes, insbesondere des Aluminiumbandes, es verhindert auch die seitliche Verschiebung dieses Bandes in den folgenden Umformungsstufen. Da nur geringe Biegekräfte erforderlich sind, wird eine relativ größere Längung des wenigstens einen weiteren / zweiten Metallbandes, insbesondere des Aluminiumbandes vermieden.

Grundsätzlich kann das erfindungsgemäße Verfahren auch ohne diese W-Formung durchgeführt werden.

Die Erfindung sieht bevorzugt vor, dass die Schenkel der Trogform des ersten Metallbandes, nach innen auf die Oberfläche des wenigstens einen weiteren Metallbandes umgeklappt werden, insbesondere das wenigstens eine weitere Metallband in seinen seitlichen Bereichen von den umgebogenen Bandkanten des ersten Metallbandes klemmend kontaktiert wird.

Hiernach kann es zum Bilden des zumindest im Wesentlichen geschlossenen Mantels vorgesehen sein, dass in mehreren Stichen die Außenflächen der Schenkel der Trogform miteinander in Kontakt gebracht werden, insbesondere durch eine relativ zum Trogform-Inneren konkave Ausformung/Rundbiegung des Trogformbodens und des zwischen diesem und den Trogformschenkeln eingeklemmten wenigstens einen weiteren Metallbandes.

In besonders bevorzugter Ausführung sieht es die Erfindung vor, ein Verschieben / Herauspressen des Material des zweiten Metallbandes, insbesondere des Aluminiumbandes durch eine weitere vorteilhafte Weiterbildung zu verhindern, bevorzugt damit sich die Zusammensetzung des Querschnitts nicht ändert. Derart hergestellte Rohrdrähte können dann besonders bevorzugt für die kritische Anwendung des thermischen Spritzens / Schweißens genutzt werden.

Die Erfindung kann dafür vorsehen, dass die Metallbänder jeweils von einem Coil abgewickelt werden und der Rohrdraht zu einem Coil aufgewickelt wird. Durch die Verarbeitung von Coils können lange Lauflängen realisiert werden. Besonders vorteilhaft ergibt sich durch die Verarbeitung von Coil zu Coil, dass eine Materialverlagerung in Längsrichtung unterbunden wird.

Die Beschreibung des Ausgangsmaterial in [0015] der Patentanmeldung US 2010/0047616 A1 lehrt, daß stabförmiges Material eingesetzt werden soll und die zu verbindenden Werkstoffe nicht von einem Coil abgerollt werden sollen: "flat strip ..., both of equal length, are brought together face-to-face to provide a laminate."

Die Erfindung sieht es in dieser bevorzugten Weiterbildung vor, ein Verschieben des Materials des wenigstens einen weiteren, insbesondere des zweiten Metallbandes, insbesondere des Aluminiums im Verbund zu verhindern, durch eine Einschränkung des Längsflusses dieses Materials. Wird statt wenige Meter langen Bandabschnitten erfindungsgemäß zumindest bei dem wenigstens einen weiteren Metallband, bevorzugt bei allen Metallbändern Coils eingesetzt, die zu dem Rohrdraht verarbeitet werden, so wird der Reibungswiderstand des wenigstens einen weiteren Metallbandes, insbesondere des Aluminiums an den Schichten des ersten Metallbandes, insbesondere den Nickelschichten in den nachfolgenden Drahtlängen so hoch, daß sich das Material des wenigstens einen weiteren Metallbandes nicht stärker längen kann als das des ersten Metallbandes.

Es ist deshalb zweckmäßig, den Verbunddraht nicht als Stange, sondern als Coil zu produzieren, bevorzugt von zwei Coils beider Ausgangsbänder oder einer entsprechenden Anzahl von Coils aller Ausgangsbänder zu einem Coil des hergestellten Rohrdrahtes. Hier kann es die Erfindung weiterhin vorsehen, dass die Metallbänder von aufeinanderfolgend eingesetzten Coils verbunden werden, insbesondere verschweißt werden, wodurch eine kontinuierliche endlose Fertigung des Rohrdrahtes ermöglicht wird.

Die Erfindung kann weiterhin vorsehen, dass die Breite des wenigstens einen weiteren Metallbandes so bemessen wird, dass zwischen der jeweiligen äußeren Bandkante des wenigstens einen weiteren Metallbandes und dem unteren Ende des Schenkels der Trogform ein durch Materialfluss schließbarer / sich schließender Freiraum gebildet wird. Die Erfindung stellt somit bewusst Leerräume / Freiräume zur Verfügung, die einen Materialfluss dahinein gestatten.

Wird das Profil im Querschnitt stark verformt, wobei der Längsfluß des Materials von dem wenigstens einen weiteren Metallband behindert wird, dehnt es sich gleichwohl stärker aus als das Material des ersten Metallbandes. Die Erfindung sieht es daher in bevorzugter Weiterbildung vor, dass dem Material des wenigstens einen weiteren / zweiten Metallbandes Freiräume bereitgestellt werden, in die es sich - trotz Klemmung - senkrecht zur Verarbeitungsrichtung bzw. Längsrichtung ausdehnen kann. Die senkrechte und bevorzugt im Prozeß waagrechte Ausdehnung ist unkritisch, da sie das Mischungsverhältnis über den Querschnitt nicht ändert.

In US 2010/0047616 A1 [0018] dient der Aluminiumfluß dazu, vorhandene Lücken auszufüllen. Um Querfluß aber überhaupt möglich zu machen, sieht es die Erfindung bevorzugt vor, Lücken bzw. Freiräume zu schaffen. Es ist zunächst kontraintuitiv, Leerräume zu schaffen, wenn sie in späteren Verarbeitungsschritten wieder geschlossen werden müssen.

Diese Leerräume erweisen sich aber erfindungsgemäß als vorteilhaft um einen Materialfluß quer zur Verarbeitungsrichtung zu erlauben. Es kann so durch einen kontrolliert zugelassenen Querfluß erschlossen werden, dass sich eine Ausdehnung des Materials des wenigstens einen weiteren Metallbandes statt in einen Längsfluß in einen Querfluß umgesetzt wird und bevorzugt so ein Aufplatzen des Profils vermieden wird.

Bevorzugt werden Freiräume bereitgestellt, deren gesamte Fläche im Rohrdraht 5 % bis 20 %, bevorzugt 9 % bis 14% des Querschnitts des wenigstens einen weiteren, insbesondere des zweiten Metallbandes beträgt.

Beispielsweise kann für Ni/Al aber auch andere Kombinationen die Untergrenze aus der Ni und Al-Fläche und der Fläche des Rohrdrahtes berechnet und die Obergrenze durch Messen ermittelt werden.

Um Leerräume zu schaffen, wird das wenigstens eine weitere Metallband in seiner Breite so gewählt, daß es nicht bis in die Ecken / an die unteren Schenkelenden des einwärts gebogenen ersten Metallbandes reicht, d.h. das Profil nicht vollständig ausfüllt. Darüber hinaus führt das Zurückbiegen des ersten Metallbandes auf sich selbst an den Kanten dazu, daß die so erzeugte Verdoppelung der Metallschicht des ersten Metallbandes wie ein Abstandshalter wirkt, der für das Metall des zweiten Metallbandes Leerräume schafft, insbesondere Leerräume in der Höhe der Materialdicke des ersten Metallbandes.

Das Metall des wenigstens einen weiteren / zweiten Metallbandes kann sich nun - trotz Klemmung durch das erste Metallband - verbreitern, weil eine Längung blockiert ist. Dadurch wird der Querschnitt vollständig ausgefüllt. Die zugelassene Verbreiterung des zweiten Metallbandes füllt die Freiräume im Querschnitt bevorzugt vollständig aus.

Durch die Erfindung bleibt somit trotz unterschiedlicher Streckgrenzen bei den beiden verschiedenen Metallbändern das Mischungsverhältnis der Metalle über den Querschnitt erhalten.

Die Erfindung kann es vorsehen eine intermetallische Verbindung zwischen den Metallbändern durch Glühen zu schaffen.

Eine intermetallische Verbindung ist regelmäßig beim Glühen plattierter Bänder zu beobachten. Bei der ersten rekristallisierenden Glühung des Verbunddrahtes entsteht mangels metallischer Verbindung der Schichten noch keine Mischkristallschicht. Auch bei der zweiten rekristallisierenden Glühung wird trotz der Reduktion und Kompression des Verbundes durch Ziehen keine metallische Verbindung hergestellt. Insbesondere kann das an einer geringen Glühtemperatur von 400 °C und einer kurzen Haltedauer von 1 Stunde liegen. Bei höheren Temperaturen und längeren Haltedauern kann beim zweiten Glühen eine intermetallische Phase beider Metalle, z.B. eine ca. 4 $\mu$m dicke intermetallische Phase aus Nickel und Aluminium entstehen, die die Schichten durch Legierungsbildung an den Grenzflächen auflöst. Dadurch werden die Schichten "verklebt". Das erschwert das Herauspressen des Metalls des wenigstens einen weiteren / zweiten Metallbandes bei der weiteren Verarbeitung zusätzlich. Die Bildung von Mischkristallschichten kann allerdings unerwünscht sein. Der Anwender kann durch Auswahl des Glühregimes entscheiden, ob eine Mischkristallschicht entstehen oder ihre Entstehung vermieden werden soll.

Die Erfindung kann es auch vorsehen, dass das Material mit hoher Streckgrenze eingepackt wird in das Material mit geringerer Streckgrenze, letzteres also den Mantel bildet.

Bei der bisherigen Darstellung ist bevorzugt davon ausgegangen worden, daß das Material mit der geringeren Streckgrenze nicht den Mantel, sondern das Innere des Verbunddrahtes bildet. Der umgekehrte Fall, in dem das Material mit der höheren Streckgrenze von Material mit geringerer Streckgrenze eingeschlossen ist, ist unkritischer, da dann der sog. Sandwicheffekt zum Tragen kommt. Er bewirkt, dass sich hartes Material, dass zwischen weichem Material eingeschlossen ist, mit weniger Kraftaufwand walzen lässt und ohne Zwischenglühung dünner ausgewalzt werden kann als das Kernmaterial gleicher Dicke. Das erfindungsgemäße Verfahren kann somit auch in dieser Konstellation der Materialien durchgeführt werden.

In bevorzugter Ausführung sieht es die Erfindung vor, den Querschnitt des erstellten Rohrdrahtes vollständig zu füllen.

Aus Bändern kann man rohrförmige Querschnitte herstellen, nicht aber drahtförmige. In US 2010/0047616 A1, Fig. 1 wird zwar ein vollständig gefüllter Querschnitt gezeigt, dieser Querschnitt läßt sich aber - wie oben gezeigt wurde - nicht durch Walzprofilieren herstellen. Zur vollständigen Füllung des Querschnitts sieht es die Erfindung vor, die Bandkanten des breiteren Materials, das als Mantel dient, um 180° zu biegen und damit auf sich selbst zurückzubiegen, so daß nach Abschluß der Profilierung im Zentrum des Drahtes eine Verdickung, bevorzugt möglichst kreisförmige Verdickung aus dem Material des Mantels entsteht. Das Ausmaß der Überlappung ist variabel; durch die Länge der 180°-Umlegung ist das spätere Kernvolumen des Mantelmaterials, insbesondere des Nickels exakt steuerbar.

Auch aus diesem Grunde sieht es die Erfindung vor, dass die für den Verbund eingesetzten Bänder nicht die gleiche Breite haben.

Gestaltung eines für die bevorzugte Anwendung des thermischen Spritzens geeigneten Drahtquerschnitts

Zweckmäßigerweise besteht sowohl das Zentrum als auch der Mantel des Verbunddrahtes aus Nickel: Wenn das Nickelband zuerst auf sich selbst und nicht auf das Aluminium verformt wird, wird nach der Einformung der Bänder zu einem Draht das gesamte Zentrum mit dem Material des Mantels ausgefüllt.

Damit das harte Aluminiumoxid das Schlauchpaket nicht beschädigen kann, ist es zweckmäßig, daß auch der Mantel aus Nickel und nicht aus Aluminium besteht.

Das Formänderungsvermögen des Verbunddrahtes ist nach ca. 80% Flächenreduktion erschöpft. Das entspricht bei einem leicht ovalen Rohrdraht von 14 mm Breite, 13 mm Höhe einer Querschnittsreduktion von 57,5%.

Soll der durch Walzprofilieren hergestellte und dann weiter verdichtete und reduzierte Draht in einer Weiterbildung der Erfindung darüber hinaus reduziert werden, ist es bevorzugt vorgesehen ein Zwischenglühen durchzuführen.

Bei der bevorzugt beschriebenen Anwendung von Nickel und Aluminium bei den beiden Metallbändern liegt die Rekristallisationstemperatur der Standardqualitäten von Nickel aber über der Schmelztemperatur von Aluminium. Der Verbund läßt sich damit nicht weichglühen. Um Nickel-Aluminiumverbunde glühen zu können, muß entweder das Aluminium mit Elementen legiert werden, die die Schmelztemperatur des Aluminiums erhöhen. Das ist z.B. Silizium. Ein solches Zulegieren ist technisch machbar, der produzierte Draht ist aber aufgrund der zugefügten Legierungselemente für den beabsichtigten Verwendungszweck nicht mehr geeignet. Alternativ muß die Rekristallisationstemperatur des eingesetzten Nickels derart herabgesetzt werden, daß sie bevorzugt deutlich unter der Schmelztemperatur von Aluminium liegt.

Diese Bedingung erfüllt nur Reinstnickel mit einem Reinheitsgrad von mindestens 99,6% und C-Gehalten von max. 0,02 wt.%. Reinstnickel mit noch höheren Reinheitsgraden (>=99,98%) rekristallisiert bereits - je nach vorangegangener Verformung - bei 300 °C bis 350 °C. Bei Einsatz von Reinstnickel von mindestens 99,6% Reinheitsgrad ist bei der Erfindung auch ein rekristallisierendes Glühen des Verbunddrahtes möglich.

In dem durch das Einrunden des ersten Metallbandes entstandenen Rohrdraht kann eine Kerbe verbleiben (vgl. Abbildung 4), insbesondere an der Fußposition der beiden ursprünglichen Trogschenkel. Bei der Weiterverarbeitung könnte beim Ziehen eingesetztes Öl in die Kerbe eindringen und beim Glühen verkoken. Das würde die chemische Zusammensetzung des Verbunddrahtes in unerwünschter Weise verändern.

Die Erfindung kann es somit vorsehen, eine solche Kerbe durch Schweißen zu verschließen.

Es sind deshalb Schweißversuche durchgeführt worden, mit dem Ziel, die Wände der Kerbe zu schließen. Mit einem Faserlaser wurde mit einer Kernleistung von 1000 W und einer Ringleistung von 2.000 W bei einer Fokuslage von 7,0 mm und einem Vorschub von 2,0 m/min. die Kerbe zugeschweißt. Die Schweißnaht übersteht die weitere Verformung des Rohdrahtes.

Die Erfindung kann auch vorsehen die Kerbe durch querschnittsreduzierende Verformung des Rohdrahtes zu verkleinern.

Wird der Rohdraht weiter verformt, ohne daß die Kerbe verschweißt wird, so zieht sich die Kerbe bei der Reduktion von 13/14 mm auf 10 mm Durchmesser derart zu, daß sie mit bloßem Auge nicht mehr erkennbar ist. Es kann somit auch auf ein Verschweißen der Kerbe verzichtet werden. Ein Verschweißen könnte bei langer Lagerung unter Umgebungstemperatur und hoher Feuchtigkeit vorteilhaft sein, damit keine Feuchtigkeit in den Verbunddraht eindringen kann.

In bevorzugter Ausführung kann es die Erfindung vorsehen, die in einem Rohdraht benötigten Verhältnisse der Atomgewichte der beteiligten Metalle in Flächenanteile der Metalle innerhalb des Rohdrahtquerschnitts umzurechnen und dann die Metallbänder gemäß den bestimmten Flächenanteilen mit dem erfindungsgemäßen Verfahren zu kombinieren. Dies wird am Beispiel der bevorzugten Anwendung von Ni/Al nachfolgend näher beschrieben.

Ein Standard für thermische Spritzdrähte ist eine Zusammensetzung von Ni 80 wt.%/Al 20 wt.%. Die Erfindung sieht es bevorzugt vor, dieses Gewichtsverhältnis in Flächenabmessungen der zu stapelnden Bänder umzurechnen.

Die folgende Formel gilt für Volumenanteile. Da die Volumenverteilung über die Länge konstant ist, gilt das Verhältnis der Volumenanteile auch für die Berechnung der Fläche. Im vorliegenden Fall gilt:

Formel:

G1 = % Masseanteil Komponente 1
G2 = % Masseanteil Komponente 2
R1 = Dichte Komponente 1
R2 = Dichte Komponente 2
V1 = % Volumenanteil Komponente 1

$$V1 = G1*R2/(G1*R2+G2*R1)$$

Daten:

| Werkstoff | Dichte g/cm$^3$ | Massen% wt% | Atom% at% |
|-----------|-----------------|-------------|-----------|
| Aluminium | 2,7 | 20 | 35.2260 |
| Nickel | 8,91 | 80 | 4.7740 |

Berechnung:

$$VAl = 20*8,91/(20*8,91 + 80*2,7) = 0,4521$$

Al = 45,21%
Ni = 54,79%

Dieses Flächenverhältnis kann von einer Vielzahl von Breiten- und Dickenkombinationen erreicht werden.
Ermittlung der Bandabmessungen aus den Flächenanteilen
Aus dem gewünschten Rohdrahtdurchmesser und der vorgeschriebenen Flächenverteilung lassen sich die Dicken der Bänder berechnen:
gegeben:

| | | | |
|---|---|---|---|
| DVDraht | = | 12,72 [mm] | Fertigdurchmesser Verbunddraht |
| pAl | = | 2,70 [g/cm$^3$] | Dichte Aluminium |
| pNi | = | 8,91 [g/cm$^3$] | Dichte Nickel |
| AAl% | = | 45,21 [%] | Flächenanteil Aluminium am Verbunddraht |
| ANi% | = | 54,79 [%] | Flächenanteil Nickel am Verbunddraht |

(fortgesetzt)

| | | | |
|---|---|---|---|
| sAL | = | 2,40 [mm] | Banddicke Aluminium (gewählt) |
| sNI | = | 1,20 [mm] | Banddicke Nickel (gewählt) |

gesucht:

| | | | |
|---|---|---|---|
| bAl | = | | [mm] |
| bNi | = | | [mm] |

Berechnung:

| | | |
|---|---|---|
| AVDraht | = | $(DVDraht)^2 * \Pi / 4$ |
| | = | $12^2 * \Pi / 4$ |
| | = | $127,08 \ [mm]^2$ |
| | | |
| bAl | = | AVDraht * AAl% / 100 / sAl |
| | = | 127,08 * 45,21 / 100 / 2,40 |
| | = | 23,94 [mm] |
| | = | 24,00 [mm] gewählt |
| | | |
| bNi | = | AVDraht * ANi% / 100 / sNi |
| | = | 127,08 * 54,79 / 100 / 1,20 |
| | = | 58,02 [mm] |
| | | 58,00 [mm] gewählt |

Anwendungsbereich der Erfindung

Während die Erfindung in bevorzugter Anwendung detailliert am Beispiel der Herstellung eines NiAl-Drahtes beschrieben wurde, weil hier die Probleme der Herstellung besonders groß sind, ist sie nicht auf diese Metallkombination begrenzt. Sie ist auch nicht darauf begrenzt, daß das weichere Material innen liegt und das härtere Material den Mantel und den Kern bildet. Dies kann auch umgekehrt sein. Entscheidend ist die möglichst weitgehende Einformung des Mantelmaterials zu einer erfindungsgemäßen Vorform bevor das zweite und ggf. weitere Metallband in den Walzprofilierprozess eingefügt werden. Da auf das verzögert eingelegten Metallband nur ein solcher Druck ausgeübt wird, wie er für das Zentrieren durch die horizontalen Walzen erforderlich ist, kann nicht nur ein Metallband, sondern es können auch mehrere in das zum Trog geformte erste Metallband eingelegt werden, insbesondere sogar solche mit unterschiedlicher Streckgrenze.

Vorteilhaft ist die Anwendung des Verfahrens insbesondere

- wenn bestimmte Legierungen schmelzmetallurgisch nicht oder nur schwer herstellbar sind, z.B. weil die Legierungsbestandteile zu Entmischung neigen. Dann muß der Einsatz bestimmter Legierungskomponenten begrenzt werden.
- wenn sich eine Legierung nur schwer verarbeiten läßt, z.B. weil sie bei der Verarbeitung brüchig wird oder schnell aufhärtet und deshalb häufig zwischengeglüht werden muss. Die Legierungskomponenten als Schichtmaterialien zu verarbeiten, kann dagegen viel einfacher sein.

In solchen Fällen kann die Legierung endabmessungsnah durch eine Diffusionswärmebehandlung erzeugt werden. Diffusion läßt sich auch einsetzen, um einen Gradienten zu erzeugen.

Nach den beschriebenen Verfahrensprinzipien lassen sich andere Metallkombinationen verarbeiten, z.B.

- Austenitisch-ferritische und sog. Duplex-Stähle Austenitisch-ferritische Stähle (z.B. Werkstoff-Nr. 1.4462) weisen ein Gefüge mit einer 2-Phasen-Struktur auf. Austenitisch-ferritische Gefüge, in denen die beiden Gefügebestandteile in etwa gleichen Teilen vorliegen, bezeichnet man auch als Duplex - Stähle (z.B. Werkstoff-Nrn. 1.4362, 1.4460, 1.4501). Sie verbinden die höhere Festigkeit ferritischer Chromstähle mit der Korrosionsbeständigkeit austenitischer CrNi-Stähle. Schwer herzustellen sind die Qualitäten, in denen die Gefügebestandteile nicht in gleichen Teilen vorliegen, insbesondere solche mit Ferritgehalten < 25 wt.% und mit Austenitgehalten < 25 wt.%. Durch Warmwalzen hergestellte Knüppel mit austenitisch-ferritischem Gefüge solcher Zusammensetzung neigen an den Ecken zu Rißbildung. Risse bilden sich auch ausgehend von Kerben in der Oberfläche. Die Streckgrenze ferritischer Stähle ist regelmäßig höher als die austenitischer Stähle. Ein Draht kann sowohl mit austenitischem Mantel und ferritischem Kern als auch mit einem Mantel aus ferritischer Stahl und einem Kern aus austenitischer Stahl hergestellt werden. Der Verbunddraht kann als Schweißdraht eingesetzt werden.

- FeCrAl-Legierungen Der Aluminiumgehalt schmelzmetallurgisch hergestellter Legierungen wird meist auf 5 bis 5,6% begrenzt, weil Legierungen mit höherem Al-Gehalt umso schwerer zu verarbeiten sind, je höher der Aluminiumgehalt ist. Mit dem neuen Verfahren können auch Drähte mit höherem Aluminiumgehalt, z.B. 9%, hergestellt werden. Das ist vorteilhaft, da das Aluminiumreservoir erhöht und damit die Lebensdauer der durch Schweißen hergestellten Schichten gesteigert wird. Stellt man den Verbunddraht aus Edelstahl- und Aluminiumbändern her, können als Stahlqualitäten ferritische Edelstähle, z.B. UNS S43000, UNS S43400 und UNS S44600, vorzugsweise mit eingeschränktem Schwefelgehalt, eingesetzt werden. Der besondere Vorteil des Verfahrens mit Zuführung der Legierungselemente durch getrennte Bänder liegt darin, dass die schwierig zu verarbeitende FeCrAl-Legierung erst am Schluß des Produktionsprozesses durch Diffusionsglühen oder sogar erst bei Nutzung als Schweißdraht erzeugt wird.

- FeNiCrAl und FeNiAl z.B. Cr26 Ni14 Al10 FeBal. bzw. z.B. Ni30 Al16 FeBal. Diese Materialkombinationen werden zur Beschichtung von Kraftwerkskesseln eingesetzt, die mit Kohle befeuert werden.

- Eingesetzt werden können die erfindungsgemäß hergestellten Drähte nicht nur als Schweiß- und thermische Spritzdrähte z.B. zum Flammspritzen, Hochgeschwindigkeitsflammspritzen, Lichtbogen-beschichten und Laserauftragsschweißen, sondern auch zur Schmelzebehandlung durch Drahtinjektion. Der Draht kann auch zur Erschmelzung nur schwer herstellbarer Legierungen, z.B. Nickelaluminiden, eingesetzt werden, in Abwandlung der Anordnung der Einsatzstoffe nach dem vom Oak Ridge National Laboratory entwickelten Exo-Melt-Verfahren. Die Legierungsherstellung erfolgt nach diesem Verfahren durch Reaktionssynthese. Ein NiAl-Verbunddraht ist besonders geeignet, durch Schmelzen Gießkörper herzustellen.

Kurze Beschreibung der Abbildungen

Abbildung 1 zeigt den Aufbau einer für die Herstellung eines Rohdrahtes geeigneten Profilieranlage.

Von einem Coil 1 wird hier ein erstes, den späteren Mantel bildendes Metallband 2 einer ersten Gruppe G1 von Walzgerüsten zugeführt, mit denen ausschließlich nur dieses erste Metallband 2 zu einer Vorform geformt wird, insbesondere nämlich einer Trogform. Von einem Coil 3 wird hier ein zweites Metallband 4 an der ersten Gruppe G1 vorbeigeführt, hier darüber hinweggeführt und mit einem S-Gerüst 5 in den Bearbeitungsweg eingeführt. Mit der zweiten Gruppe G2 von Walzgerüsten werden sodann beide Metallbänder 2 und 4 gemeinsam verformt bis zur erfindungsgemäßen Endform.

In dieser Ausführung ist noch eine optionale Gruppe G3 von weiteren Bearbeitungsstationen dargestellt, mit denen der hergestellte Rohdraht 7 z.B. noch kalibriert und/oder gerichtet werden kann.

Am Ende der Bearbeitungsstrecke wird auf dem Aufhaspel 6 der erfindungsgemäß hergestellte Rohdraht 7 aufgewickelt.

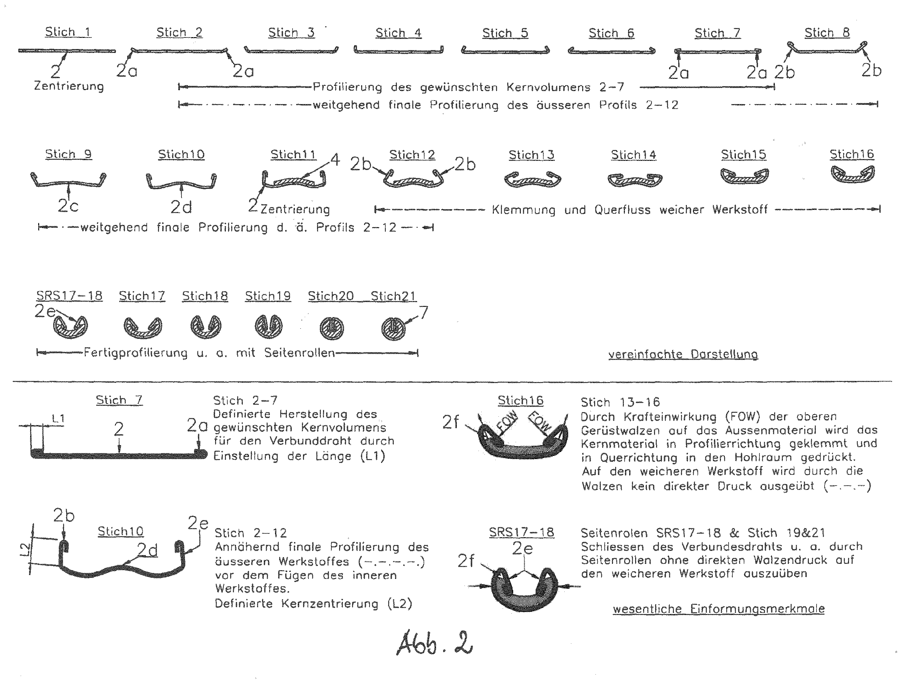

Die Reihenfolge der Verformungsschritte ist in Abbildung 2 dargestellt.

Im Stich 1, somit dem ersten Walzgerüst, erfolgt eine Zentrierung des ersten Metallbandes 2. In den Stichen 2 bis einschließlich 7 werden die gegenüberliegenden Bandkanten 2a des Metallbandes 2 um 180 Grad auf sich selbst umgelegt, somit hier an der seitlichen Bandkante das Material aufgedoppelt.

In den Stichen 8 bis 10 werden durch Hochstellen der Bandseitenbereiche die seitlichen Trogschenkel 2b ausgebildet. In dieser gezeigten Ausführung wird weiterhin der Trogboden 2c mit einer in das Innere der Trogform konvex aufragenden Ausbauchung 2d versehen, was eine W-Form der Trogform erzeugt.

Ab Stich 11 wird das zweite Metallband 4 in den Bearbeitungsweg eingeführt, zentriert und über die Ausbauchung 2d der Trogform gebogen.

In den Stichen 12 bis 14 werden die Trogschenkel 2b in Richtung zum Inneren der Trogform und auf die Seitenbereiche des zweiten Metallbandes 4 umgelegt, wodurch dieses klemmend mit dem ersten Metallband verbunden wird.

In den Stichen 15 bis 21 werden die Trogschenkel 2b mit ihren früheren Aussenseiten 2e, bezogen auf die frühere Trogform der Stiche 8 bis 10 aufeinander zu verformt, und hierdurch der geklemmte Verbund beider Metallbänder eingerundet, wobei die Ausbauchung 2d zurückverformt wird, bis dass in Stich 21 die Aussenseiten einander kontaktieren und der erfindungsgemäße Rohdraht 7 fertig hergestellt ist.

Die vergrößerte Darstellung der in den Stichen 16 und 18 erzielten Form zeigt weiterhin einen durch Materialfluß schließbaren Freiraum 2f zwischen der Metallbandkante des zweiten Metallbandes 4 und den früheren unteren Bereichen der Trogformschenkel 2b.

Abbildung 3 zeigt den zur Profilierung eingesetzten Rollensatz. Abbildung 4 zeigt den Schliff durch den Querschnitt eines Verbunddrahtes von 1,6 mm Durchmesser.

Ausführungsbeispiel

Die Herstellung eines NiAl-Drahtes aus Bändern statt als schmelzmetallurgisch erzeugte Legierung hat den Vorteil, daß der exotherme Effekt bei Aufschmelzen des Aluminiums zu einer besseren Haftung der aufgespritzten Legierung führt. Im Vergleich zur Einbringung des Aluminiums in Pulverform ist vorteilhaft, daß weniger Oxide eingetragen werden.

• Materialqualitäten

Eingesetzt wurde Nickelband mit einem Reinheitsgrad von 99,98 wt.% und einem C-Gehalt von 0,002 wt.%. Als Aluminiumband wurde die Qualität EN AW 1050A verwendet.

• Bandabmessungen

Es ist eine Vielzahl von Abmessungsvarianten denkbar; zu berücksichtigen ist, daß Änderungen der Dicke auch zu Änderungen der Breite führen. Aufgrund der sich in diesem Beispiel aus der Abrollung ergebenden fixierten Breiten des Ni- und des Al-Einsatzbandes mit 58 mm bzw. 24 mm und der vorgegebenen Flächenverteilung Al/Ni = 45,21 %/54,79% für die bevorzugte Anwendung als thermischer Spritzdraht ergibt sich die Dicke des Nickelbandes mit 1,2 mm, die des Aluminiumbandes von 2,40 mm.

Überprüfung:

| Metall | Breite | Dicke | Fläche | |
|--------|--------|-------|--------|--------|
| | mm | mm | abs. in mm2 | in % |
| Ni | 58,0 | 1,2 | 69,6 | 54,72 |
| Al | 24,0 | 2,4 | 57,6 | 45.28 |
| | | | | 100,00 |

• Walzprofilieren

Bei der Herstellung des Rohdrahtes durch einen Rollformprozess wird auf den einzelnen Profilierungsstufen zur Vermeidung einer überproportionalen Längung des Metalls mit der geringeren Streckgrenze wie folgt vorgegangen. Zu den einzelnen Stichen vgl. Abbildung 2:

| Stiche | Vorgehen |
|--------|----------|
| 2 bis 7 | Definierte Herstellung des gewünschten Kernvolumens des späteren Verbunddrahtes vor der Zusammenführung der beiden Werkstoffe durch Rollformen. Dafür wird in diesen Stichen die Bandkante auf sich selbst um 180 Grad umgelegt und somit aufgedoppelt. Zunächst wird das Nickelband möglichst weit in seine Zielgeometrie separat profiliert. |
| 8 bis 12 | Weitgehend finale Herstellung der Zielgeometrie des härteren Werkstoffes (hier: Ni) vor der Zuführung des weicheren Werkstoffes (hier: Al), um dessen Geometrie zu schonen und eine Längung in Profilierrichtung zu vermeiden. In den Stichen 8 bis 10 werden die Schenkel hochgestellt und so die Trogform gebildet, hier mit W-förmiger Ausbauchung. Ab Stich 11 |

| Stiche | Vorgehen |
|---|---|
| | wird das Al-Band mit geringem Druck konvex über dem konvexen Nickelband eingeformt. Dazu wird die vorübergehende W-Einformung eingesetzt. |
| 13 und 14 | Sofortige Klemmung des weicheren Werkstoffes nach der zentrischen Zuführung durch das Auflegen der umgelegten Bandkanten des härteren Werkstoffes. Ohne direkten Walzendruck auf den weicheren Werkstoff wird eine nachteilige Längung durch dessen Auswalzen vermieden. |
| 13 bis 16 | Schaffung einer schlüssigen Verbindung zur Erzeugung der Bandführung zwischen den Werkstücken/ Werkstoffen. Füllung der seitlichen Hohlräume durch Blockierung von Längskräften und Ermöglichung von Querkräften. Die Umformung des konvexen in ein konkaves Band beginnend in Stich 15 erfolgt durch Seitenrollen. Im Profil wird nur eine Haltekraft aufgebracht. |
| 16 bis 21 | Hochstellung der Verbundrohrseiten, vor allem mit Seitenrollen (vgl. SRS 17-18 in Abbildung 3), damit eine Druckausübung auf das innere weiche Band minimiert wird. Vermeidung von Längskräften, somit keine Längung des weichen Bandes. Durch Walzprofilieren und Kalibrieren wird ein Rohrdraht mit einem Durchmesser von 14 mm in der Breite und 13 mm in der Höhe produziert. Der Querschnitt ist noch nicht vollständig gefüllt. Nach Kalibrieren und Reduktion auf 12 mm ist die Verdichtung abgeschlossen. |

Nach diesen Vorgaben wurde die Auslegung der Walzenquerschnitte mit der Software "Copra RF2015 (Service Release 3)" der data M Sheet Metal Solutions GmbH, Am Marschallfeld 17, D-83626 Oberlaindern/Valley, unterstützt. Profiliert wurde mit einer Dreistern P120 mit 21 Verformungsstationen.

Am Ausgang der Profilierstrecke wird der Rohrdraht als Endlosdraht aufgecoilt.

Zunächst ist beim Profilieren aufgrund mangelnder Stabilität der eingesetzten Gerüste ein Rohrdrahtverbund mit einem leicht ovalen Aussendurchmesser von 14 mm Breite und 13 mm Höhe erzeugt worden. Durch den Einsatz stabiler ausgelegter Gerüste oder durch weitere Kalibrierstiche kann das Profil vollständig eingerundet und im Durchmesser reduziert werden.

Durch Nachmessen der Nickelbanddicke wurde festgestellt, daß sich durch das Walzprofilieren die Dicke des - nun profilierten - Nickelbandes nicht mindert; es kommt vielmehr zu einer geringen Aufdickung.

Um den Rohrdraht auf die Standardabmessungen von thermischen Spritzdrähten zu reduzieren, sind bei einem Rohrdrahtdurchmesser von 13/14 mm mehrere Reduktionsschritte erforderlich. Der Rohrdraht kann durch weitere Walzprofilierungsschritte, Walzen, Ziehen, Strecken und Hämmern reduziert werden.

• Weiteres Walzprofilieren zur Reduktion des Querschnitts

Da nach der Herstellung des Rohrdrahtes nicht zwischengeglüht werden muß, kann die weitere Querschnittsreduzierung in einem Arbeitsgang mit dem Walzprofilieren (Inline) vorgenommen werden. Erforderlich sind dann zusätzliche, nicht mehr in Abb. 1 und 2 dargestellte Verformungsstationen. Andererseits wird ein separater Arbeitsgang, wie er im Folgenden beschrieben wird, eingespart.

• Walzen und Aufcoilen mit einer Ziehoperation

Eine Ovalität des Rohrdrahtes erweist sich dann als vorteilhaft, wenn der Querschnitt durch Walzen reduziert werden soll. Drahtwalzgerüste sind aus abwechselnd horizontal und vertikal ausgerichteten Walzgerüsten aufgebaut, die wechselnd einen ovalen bzw. runden Querschnitt walzen. Durch das Walzen von Ovalen wird die Gratbildung vermieden.

Der erfindungsgemäß hergestellte Rohrdraht von 13/14 mm Durchmesser wurde zunächst durch ein 6-gerüstiges Fuhr-Walzgerüst des Typs W10-3 auf 10 mm reduziert. Dem Walzgerüst nachgelagert wurde ein Herborn Einzelziehblock EG IV, mit dem der Draht auf 8 mm reduziert und gleichzeitig aufgecoilt wurde.

Beim Reduzieren durch Hämmern treten bereits bei einer Verformung (ohne Zwischenglühen) von 70% (flächenbezogen) Mikrorisse auf der Innenseite des Außenmantels auf.

• Rekristallisierendes Glühen

Durch das Walzprofilieren werden die eingesetzten Werkstoffe zwar aufgehärtet, aber nicht derart, daß das Formänderungsvermögen erschöpft wäre. Ein rekristallisierendes Glühen unmittelbar nach dem Walzprofilieren des Rohrdrahtes ist daher nicht erforderlich. Der walzprofilierte Rohrdraht kann vielmehr, wie oben unter 4. und 5. beschrieben, noch bis auf 8 mm weiter reduziert werden.

Das von der Herborn abgenommene Coil mit 8 mm Durchmesser wurde bei 450 °C, Haltedauer 1 Std.; unter Schutzgas (Argon mit 10% Wasserstoff) rekristallisierend geglüht.

Das rekristallisierende Glühen führt nicht zu einem Verschweißen der Schichten. Einerseits tritt daher keine Mischkristallbildung ein, andererseits werden die Schichten auch durch Mischkristallbildung nicht verbunden. Gleichwohl kann bei der weiteren Verarbeitung das zuvor aufgetretene Problem der unterschiedlichen Längung der verbundenen Werkstoffe weitgehend ignoriert werden, da der Reibungswiderstand im Draht - auf den Querschnitt bezogen - umso größer wird, je dünner und länger der Draht ist.

• Ziehen und Endglühung

Nach dem Glühen muß der Draht auf die Standardabmessungen von thermischen Spritzdrähten, 3,2 bzw. 1,6 mm, reduziert werden.

Ziehversuche haben ergeben, daß mit einer Verformung > 85% des Flächenquerschnitts das Formänderungsvermögen des Nickels und des Aluminiums überschritten werden. Es entstehen zunächst Risse an der Innenseite des Nickelmantels. Bei Überschreitung des Formänderungsvermögens des Verbunddrahtes reißen zunächst die nur einseitig abgestützten eingefalteten und gedoppelten früheren Nickelbandkanten ab; sie reißen eher als der Mantel. Bei weiterer Verformung reißt schließlich die Aluminiumschicht im Verbund. Das ist an Einbuchtungen im Draht feststellbar.

Durch Reißen der Nickelstege und der Aluminiumeinlage ändert sich unkontrollierbar die Zusammensetzung des Querschnitts.

In einer aus 8 Stationen bestehenden Ziehmaschine ist der Draht von 8 mm auf 3,53 mm mit einer Reduktion pro Zug von 18,5% gezogen worden.

Die Gesamtverformung beträgt 80,5%. Bei einem Durchmesser von 3,53 mm ist der Draht bei 450 °C mit einer Std. Haltedauer geglüht worden.

Auch bei der zweiten Glühung entsteht bei diesen Glühparametern keine intermetallische Phase. Wird die Bildung einer intermetallischen Phase angestrebt, muß bei einer Glühtemperatur von 450 °C mind. eine Haltedauer von 3 Stunden eingehalten werden.

Die Endabmessungen von 3,2 und 1,6 mm werden mit einem bzw. fünf Zügen erreicht:
Nach einem Zug ist der Draht wegen seiner geringen Verformung relativ weich und gut in Schlauchpaketen förderbar.

Die Gesamtverformung bei einer Reduktion auf 1,6 mm Durchmesser (vgl. Abbildung 4) beträgt 79,5%. Der Draht ist zwar hart, aber wegen seines geringen Durchmessers durch Schlauchpakete förderbar.

**Patentansprüche**

1. Verfahren zur Herstellung eines Rohrdrahtes (7) aus einem ersten Metallband (2) und wenigstens einem weiteren Metallband (4) durch Walzprofilieren, wobei das erste (2) und das wenigstens eine weitere Metallband (4) aus verschiedenen Metallen mit verschiedener Streckgrenze ausgebildet sind, wobei durch das Walzprofilieren mit mehreren Walzgerüsten (G1, G2) in mehreren Stichen aus dem ersten Metallband (2) ein Mantel geformt wird, der in der Endform das wenigstens eine weitere Metallband (4) in der Umfangsrichtung vollständig umgibt, **dadurch gekennzeichnet, dass** mit einer ersten Gruppe (G1) von Walzgerüsten in mehreren Stichen zunächst ausschließlich nur das erste Metallband (2) zu einer Vorform geformt wird und hiernach in einer zweiten Gruppe (G2) von Walzgerüsten das erste (2) und das wenigstens eine weitere Metallband (4) gemeinsam zur Endform geformt werden, wobei mit den Walzgerüsten der ersten Gruppe (G1) zur Formung des ersten Metallbandes (2) in die Vorform aus dem ersten Metallband (2) betrachtet im Querschnitt senkrecht zur Längsrichtung des Metallbandes (2) eine Trogform geformt wird und hiernach in das Innere der Trogform mit Kontakt zum Bodenbereich der Trogform das wenigstens eine weitere Metallband (4) eingeführt wird, wonach das erste (2) und das wenigstens eine weitere Metallband (4) in klemmender Verbindung miteinander durch die zweite Gruppe (G2) von Walzgerüsten gemeinsam geformt werden.

2. Verfahren nach Anspruch 1, **dadurch gekennzeichnet, dass** eine Trogform mit seitlichen Trogformschenkeln (2b) und einem diese verbindenden Trogformboden (2c) geformt wird.

3. Verfahren nach Anspruch 2, **dadurch gekennzeichnet, dass** die Trogform geformt wird durch Umformungen des ersten Metallbandes (2) umfassend folgende Umformungsschritte

    a. Umbiegen der beiden sich gegenüberliegenden Bandkanten (2a) des ersten Metallbandes (2) jeweils um 180 Grad auf die Oberfläche des Metallbandes (2), insbesondere Umbördeln der Bandkanten (2a)
    b. Formung von zwei aufstehenden Schenkeln (2b) durch Umbiegen der beiden sich gegenüberliegenden Seitenbereiche des ersten Metallbandes (2), insbesondere jeweils um 90 Grad plus/minus 15 Grad aus der ursprünglichen Metallbandebene, wobei die beiden Schenkel (2b) seitliche äußere Wände der Trogform und ein die Schenkel verbindender Bereich einen Boden (2c) der Trogform bildet.

**4.** Verfahren nach Anspruch 3, **dadurch gekennzeichnet, dass** in den Boden (2c) der Trogform eine in das Innere der Trogform weisende Ausbauchung (2d) , bevorzugt konvexe Ausbauchung (2d) eingeformt wird, insbesondere zur Bildung einer W-förmigen Trogform.

**5.** Verfahren nach einem der vorherigen Ansprüche 2 bis 4, **dadurch gekennzeichnet, dass** wenigstens ein weiteres Metallband (4) mit Kontakt zum Boden (2c) der Trogform zentriert in den Trog eingeführt wird.

**6.** Verfahren nach Anspruch 4 und 5, **dadurch gekennzeichnet, dass** das wenigstens eine weitere Metallband (4) über die konvexe Ausbauchung (2d) herübergebogen wird.

**7.** Verfahren nach einem der vorherigen Ansprüche 2 bis 6, **dadurch gekennzeichnet, dass** die Schenkel (2b) der Trogform des ersten Metallbandes (2), nach innen auf die Oberfläche des wenigstens einen weiteren Metallbandes (4) umgeklappt werden, insbesondere das wenigstens eine weitere Metallband (4) in seinen seitlichen Bereichen von den umgebogenen Bandkanten (2a) des ersten Metallbandes (2) klemmend kontaktiert wird.

**8.** Verfahren nach einem der vorherigen Ansprüche 2 bis 7, **dadurch gekennzeichnet, dass** in mehreren Stichen die Außenflächen (2e) der Schenkel (2b) der Trogform miteinander in Kontakt gebracht werden, insbesondere durch eine relativ zum Trogform-Inneren konkave Ausformung/Rundbiegung des Trogformbodens (2c) und des zwischen diesem und den Trogformschenkeln (2b) eingeklemmten wenigstens einen weiteren Metallbandes (4).

**9.** Verfahren nach einem der vorherigen Ansprüche, **dadurch gekennzeichnet, daß** die Metallbänder (2, 4) jeweils von einem Coil (1, 3) abgewickelt werden und der Rohdraht (7) zu einem Coil (6) aufgewickelt wird

**10.** Verfahren nach einem der vorherigen Ansprüche, **dadurch gekennzeichnet, dass** das erste Metallband (2) ein Metall mit einer höheren Streckgrenze im Vergleich zur Streckgrenze des Metalls des wenigstens einen weiteren Metallbandes (4) aufweist.

**11.** Verfahren nach einem der vorherigen Ansprüche 2 bis 10, **dadurch gekennzeichnet, dass** die Breite des wenigstens einen weiteren Metallbandes (4) so bemessen wird, dass zwischen der jeweiligen äußeren Bandkante des wenigstens einen weiteren Metallbandes (4) und dem unteren Ende des Schenkels (2b) der Trogform ein durch Materialfluß schließbarer / sich schließender Freiraum (2f) gebildet wird.

**12.** Verfahren nach einem der vorherigen Ansprüche, **dadurch gekennzeichnet, daß** der Rohdraht (7), insbesondere nach einer Kalibrierung und/oder Reduzierung rekristallisierend geglüht wird.

**13.** Verfahren nach einem der vorherigen Ansprüche, **dadurch gekennzeichnet, dass** als Metall mit der höheren Streckgrenze, insbesondere für das erste Metallband (2) Reinstnickel mit einem Reinheitsgrad von Ni $\geq$ 99,6 wt.% und einem C-Gehalt von $\leq$ 0,02 wt% gewählt wird, das Material mit der geringeren Streckgrenze, insbesondere für das einzige weitere Metallband (4) Aluminium oder eine Aluminiumlegierung gewählt wird.

**14.** Verfahren nach einem der vorherigen Ansprüche 1 bis 12, **dadurch gekennzeichnet, daß** für das erste und das wenigstens eine weitere Metallband (2,4) eine der folgenden Materialpaarungen gewählt wird:

    a. ein austenitischer und ein ferritischer Edelstahl oder
    b. ein ferritischer Edelstahl und Aluminium oder eine Aluminiumlegierung oder
    c. Eisen, Stahl oder ferritische Edelstähle und Nickel und Aluminium eingesetzt werden, um einen Verbunddraht aus FeNiCrAl und FeNiAl herzustellen

**Claims**

**1.** Method for producing a raw wire (7) from a first metal strip (2) and at least one further metal strip (4) by roll profiling, wherein the first metal strip (2) and the at least one further metal strip (4) are formed from different metals having different yield strength, wherein a shell is formed from the first metal strip (2) by the roll profiling in multiple passes by means of multiple roll stands (G1, G2), said shell in the final shape completely surrounding the at least one further metal strip (4) in the circumferential direction, **characterized in that**, by means of a first group (G1) of roll stands, in multiple passes, firstly exclusively only the first metal strip (2) is formed to give a preliminary shape and then, in a second group (G2) of roll stands, the first metal strip (2) and the at least one further metal strip (4) are formed together to give a final shape, wherein, by means of the roll stands of the first group (G1) for forming the first metal strip (2) into the preliminary shape, a trough shape is formed from the first metal strip (2) as viewed in cross section perpendicular to the longitudinal direction of the metal strip (2) and then the at least one further metal strip (4) is introduced into the interior of the trough shape so as to contact the bottom region of the trough shape, after which the first metal strip (2) and the at least one further metal strip (4) are formed together in clamping connection to one another by the second group (G2) of roll stands.

2. Method according to Claim 1, **characterized in that** a trough shape with lateral trough shape limbs (2b) and a trough shape bottom (2c) connecting said lateral trough shape limbs is formed.

3. Method according to Claim 2, **characterized in that** the trough shape is formed by deformations of the first metal strip (2) comprising the following deformation steps

   a. bending each of the two opposite strip edges (2a) of the first metal strip (2) through 180 degrees onto the surface of the metal strip (2), in particular flanging the strip edges (2a),
   b. forming two upright limbs (2b) by bending the two opposite side regions of the first metal strip (2), in particular in each case through 90 degrees plus/minus 15 degrees from the original metal strip plane, wherein the two limbs (2b) form lateral outer walls of the trough shape and a region connecting the limbs forms a bottom (2c) of the trough shape.

4. Method according to Claim 3, **characterized in that** a bulge (2d) facing into the interior of the trough shape, preferably a convex bulge (2d), is formed into the bottom (2c) of the trough shape, in particular so as to form a W-shaped trough shape.

5. Method according to one of the preceding Claims 2 to 4, **characterized in that** at least one further metal strip (4) is introduced into the trough so as to be centred in contact with the bottom (2c) of the trough shape.

6. Method according to Claims 4 and 5, **characterized in that** the at least one further metal strip (4) is bent over the convex bulge (2d).

7. Method according to one of the preceding Claims 2 to 6, **characterized in that** the limbs (2b) of the trough shape of the first metal strip (2) are folded over inwards onto the surface of the at least one further metal strip (4), in particular the at least one further metal strip (4) is contacted in a clamping manner in its lateral regions by the bent strip edges (2a) of the first metal strip (2).

8. Method according to one of the preceding Claims 2 to 7, **characterized in that**, in multiple passes, the outer surfaces (2e) of the limbs (2b) of the trough shape are brought into contact with one another, in particular by the trough shape bottom (2c) and the at least one further metal strip (4) clamped between the latter and the trough shape limbs (2b) being concavely shaped/bent round relative to the trough shape interior.

9. Method according to one of the preceding claims, **characterized in that** the metal strips (2, 4) are each unwound from a coil (1, 3) and the raw wire (7) is wound up into a coil (6).

10. Method according to one of the preceding claims, **characterized in that** the first metal strip (2) comprises a metal with a higher yield strength in comparison to the yield strength of the metal of the at least one further metal strip (4).

11. Method according to one of the preceding Claims 2 to 10, **characterized in that** the width of the at least one further metal strip (4) is dimensioned such that a free space (2f) which can be/is closed by material flow is formed between the respective outer strip edge of the at least one further metal strip (4) and the lower end of the limb (2b) of the trough shape.

12. Method according to one of the preceding claims, **characterized in that** the raw wire (7), in particular after a calibration and/or reduction, is subjected to recrystallization annealing.

**13.** Method according to one of the preceding claims, **characterized in that** high-purity nickel with a degree of purity of Ni ≥ 99.6 wt% and a C content of ≤ 0.02 wt% is selected as metal with the higher yield strength, in particular for the first metal strip (2), aluminium or an aluminium alloy is selected the material with the lower yield strength, in particular for the single further metal strip (4) .

**14.** Method according to one of the preceding Claims 1 to 12, **characterized in that** one of the following material pairings is selected for the first and the at least one further metal strip (2, 4):

a. an austenitic and a ferritic stainless steel, or
b. a ferritic stainless steel and aluminium or an aluminium alloy, or
c. iron, steel or ferritic stainless steels and nickel and aluminium are used in order to produce a composite wire composed of FeNiCrAl and FeNiAl.

**Revendications**

**1.** Procédé de fabrication d'un fil brut (7) à partir d'une première bande métallique (2) et d'au moins une autre bande métallique (4) par profilage sur galets, la première (2) et l'au moins une autre bande métallique (4) étant formées à partir de différents métaux présentant différentes limites d'élasticité, une enveloppe qui entoure complètement l'au moins une autre bande métallique (4) dans la direction périphérique dans la forme finale étant formée à partir de la première bande métallique (2) dans plusieurs passes par le profilage sur galets à l'aide de plusieurs cages de laminoir (G1, G2), **caractérisé en ce que**, tout d'abord, exclusivement seulement la première bande métallique (2) est formée en une préforme dans plusieurs passes à l'aide d'un premier groupe (G1) de cages de laminoir et, ensuite, la première (2) et l'au moins une autre bande métallique (4) sont formées ensemble en une forme finale dans un deuxième groupe (G2) de cages de laminoir, une forme d'auge étant formée à partir de la première bande métallique (2) en la préforme, considérée en section transversale perpendiculairement à la direction longitudinale de la bande métallique (2), à l'aide des cages de laminoir du premier groupe (G1) pour la formation de la première bande métallique (2) et, ensuite, l'au moins une autre bande métallique (4) est insérée dans l'intérieur de la forme d'auge avec contact par rapport à la région de base de la forme d'auge, après quoi la première (2) et l'au moins une autre bande métallique (4) sont formées ensemble, en liaison par serrage l'une avec l'autre, au moyen du deuxième groupe (G2) de cages de laminoir.

**2.** Procédé selon la revendication 1, **caractérisé en ce qu'**une forme d'auge est formée avec des branches latérales de forme d'auge (2b) et une base de forme d'auge (2c) reliant celles-ci.

**3.** Procédé selon la revendication 2, **caractérisé en ce que** la forme d'auge est formée par des façonnages de la première bande métallique (2) comportant les étapes de façonnage suivantes

a. flexion des deux bords de bande (2a), opposés l'un à l'autre, de la première bande métallique (2) respectivement sur 180 degrés sur la surface de la bande métallique (2), en particulier bordelage des bords de bande (2a)
b. formation de deux branches (2b) relevées, par flexion des deux régions latérales, opposées l'une à l'autre, de la première bande métallique (2), en particulier respectivement sur 90 degrés plus ou moins 15 degrés hors du plan de bande métallique d'origine, les deux branches (2b) formant des parois extérieures latérales de la forme d'auge et une région reliant les branches formant une base (2c) de la forme d'auge.

**4.** Procédé selon la revendication 3, **caractérisé en ce qu'**un bombement (2d), de préférence un bombement (2d) convexe, tourné vers l'intérieur de la forme d'auge, est formé dans la base (2c) de la forme d'auge, en particulier pour la formation d'une forme d'auge en forme de W.

**5.** Procédé selon l'une des revendications précédentes 2 à 4, **caractérisé en ce qu'**au moins une autre bande métallique (4) est insérée dans l'auge de manière centrée avec contact par rapport à la base (2c) de la forme d'auge.

**6.** Procédé selon les revendications 4 et 5, **caractérisé en ce que** l'au moins une autre bande métallique (4) est courbée sur le bombement (2d) convexe.

**7.** Procédé selon l'une des revendications précédentes 2 à 6, **caractérisé en ce que** les branches (2b) de la forme d'auge de la première bande métallique (2) sont repliées vers l'intérieur sur la surface de l'au moins une autre bande métallique (4), en particulier l'au moins une autre bande métallique (4), dans ses régions latérales, est mise en contact de manière serrée avec les bords de bande (2a) courbés de la première bande métallique (2).

8. Procédé selon l'une des revendications précédentes 2 à 7, **caractérisé en ce que** les surfaces extérieures (2e) des branches (2b) de la forme d'auge sont amenées en contact l'une avec l'autre dans plusieurs passes, en particulier par une déformation/flexion circulaire, concave par rapport à l'intérieur de la forme d'auge, de la base de forme d'auge (2c) et de l'au moins une autre bande métallique (4) serrée entre celle-ci et les branches de forme d'auge (2b).

9. Procédé selon l'une des revendications précédentes, **caractérisé en ce que** les bandes métalliques (2, 4) sont déroulées respectivement à partir d'une bobine (1, 3) et le fil brut (7) est enroulé de manière à former une bobine (6).

10. Procédé selon l'une des revendications précédentes, **caractérisé en ce que** la première bande métallique (2) comprend un métal présentant une limite d'élasticité plus élevée que la limite d'élasticité du métal de l'au moins une autre bande métallique (4).

11. Procédé selon l'une des revendications précédentes 2 à 10, **caractérisé en ce que** la largeur de l'au moins une autre bande métallique (4) est dimensionnée de telle sorte qu'un espace libre (2f) pouvant être fermé/se fermant par flux de matière soit formé entre le bord de bande extérieur respectif de l'au moins une autre bande métallique (4) et l'extrémité inférieure de la branche (2b) de la forme d'auge.

12. Procédé selon l'une des revendications précédentes, **caractérisé en ce que** le fil brut (7) est soumis à un recuit de recristallisation, en particulier après un calibrage et/ou une réduction.

13. Procédé selon l'une des revendications précédentes, **caractérisé en ce que** du nickel extra-pur présentant un degré de pureté de Ni $\geq$ 99,6 % en poids et une teneur en C $\leq$ 0,02 % en poids est sélectionné comme métal présentant la limite d'élasticité plus élevée, en particulier pour la première bande métallique (2), de l'aluminium ou un alliage d'aluminium est sélectionné la matière présentant la limite d'élasticité plus petite, en particulier pour l'autre bande métallique (4) unique.

14. Procédé selon l'une des revendications précédentes 1 à 12, **caractérisé en ce que** l'une des paires de matières suivantes est sélectionnée pour la première et l'au moins une autre bande métallique (2, 4) :

   a. un acier fin austénitique et un acier ferritique ou
   b. un acier fin ferritique et de l'aluminium ou un alliage d'aluminium ou
   c. du fer, de l'acier ou des aciers fins ferritiques et du nickel et de l'aluminium sont utilisés pour fabriquer un fil composite à partir de FeNiCrAl et de FeNiAl.

Abwickelhaspel
uncoiler

Abwickelhaspel
uncoiler

konv. Einformen
conventional forming

G1

Verbundformen
composite forming

G2

Richten
straightening

G3

Aufwickelhaspel (oszill.)
coiler (oscillating)

Bandendenscher- u. schweissmaschine
strip end shear- and weldingmachine

Verbindung
connection

Kalibrierung
calibration

Schweissen (optional)
welding (optionally)

Q-Kontrolle
quality control

Profilieranlage
Section lines / roll forming

Abb. 1

vereinfachtes Anlagenprinzip zur Herstellung eines Verbunddrahtes

Stich 1    Stich 2    Stich 3    Stich 4    Stich 5    Stich 6    Stich 7    Stich 8

2    2a    2a        2a    2a 2b    2b

Zentrierung

|——————Profilierung des gewünschten Kernvolumens 2–7 ——————|

|—·—·—·—·—weitgehend finale Profilierung des äusseren Profils 2–12 ——·—·—·—·—|

Stich 9    Stich10    Stich11   4   2b   Stich12   2b    Stich13    Stich14    Stich15    Stich16

2c    2d    2 Zentrierung

|——————————— Klemmung und Querfluss weicher Werkstoff ———————————|

|—·—weitgehend finale Profilierung d. ä. Profils 2–12 —·—|

SRS17–18   Stich17   Stich18   Stich19   Stich20   Stich21

2e                   7

|——————Fertigprofilierung u. a. mit Seitenrollen——————|

vereinfachte Darstellung

Stich 7

L1   2   2a

**Stich 2–7**
Definierte Herstellung des gewünschten Kernvolumens für den Verbunddraht durch Einstellung der Länge (L1)

**Stich16**

2f   FOW   FOW

**Stich 13–16**
Durch Krafteinwirkung (FOW) der oberen Gerüstwalzen auf das Aussenmaterial wird das Kernmaterial in Profilierrichtung geklemmt und in Querrichtung in den Hohlraum gedrückt. Auf den weicheren Werkstoff wird durch die Walzen kein direkter Druck ausgeübt (—·—·—)

2b   Stich10   2e   L2   2d

**Stich 2–12**
Annähernd finale Profilierung des äusseren Werkstoffes (—·—·—·—·—.) vor dem Fügen des inneren Werkstoffes.
Definierte Kernzentrierung (L2)

**SRS17–18**

2f   2e

**Seitenrolen SRS17–18 & Stich 19&21**
Schliessen des Verbundesdrahts u. a. durch Seitenrollen ohne direkten Walzendruck auf den weicheren Werkstoff auszuüben

wesentliche Einformungsmerkmale

Abb. 2

Stich 1   Stich 2   Stich 3   Stich 4   Stich 5   Stich 6   Stich 7   Stich 8

Zentrierung   |——————Profilierung des gewünschten Kernvolumens 2—7——————|

|—·—·——·—·—·· weitgehend finale Profilierung des äusseren Profils 2—12——·—·—·—|

Stich 9   Stich 10   Stich 11   Stich 12   Stich 13   Stich 14   Stich 15   Stich 16

Zentrierung   |—————— Klemmung und Querfluss weicher Werkstoff——————|

|——weitg. finale Prof. d. ä. Profils 2—12——|

Stich 17   SRS 17—18   Stich 18   Stich 19   Stich 20   Stich 21   schweissen   kalibrieren   kalibrieren

|——————Fertigprofilierung u. a. mit Seitenrollen——————|   |———— optional ————|

Abb. 3

Abb. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3940964 A
- US 20100047616 A1
- US 20100047616 A

- US 4203188 A
- US 4048705 A
- FR 2974528 A1
- DE 19916234 A1